# EUROPÄISCHE PATENTSCHRIFT

(11) **EP 2 886 905 B1**
(45) Veröffentlichungstag und Bekanntmachung des Hinweises auf die Patenterteilung: **18.09.2019**
(21) Anmeldenummer: 13198849.5
(22) Anmeldetag: 20.12.2013
(51) Int. Cl.: F16F 7/00, F16F 7/08, F16F 7/12

(54) **Zugenergieabsorber sowie Leichtbaustruktur**
Train energy absorber and lightweight structure
Absorbeur d'énergie de traction et structure de construction légère

(43) Veröffentlichungstag der Anmeldung: 24.06.2015
(73) Patentinhaber: Airbus Defence and Space GmbH, 85521 Ottobrunn (DE)
(72) Erfinder: Bergmann, Tim, 81663 München (DE); Heimbs, Sebastian, 81663 München (DE); Bautz, Brian, 81663 München (DE); Havar, Tamas, 81663 München (DE); Breu, Christoph, 81663 München (DE)
(74) Vertreter: Isarpatent

(56) Entgegenhaltungen:
- EP-A1- 0 827 888
- WO-A1-96/27055
- DE-A1-102006 007 030
- DE-A1-102006 023 688
- DE-A1-102010 027 859
- GB-A- 1 313 153
- US-A1- 2011 236 622
- DATABASE WPI Week 198709 Thomson Scientific, London, GB; AN 1987-063018 XP002725414, -& SU 1 240 972 A1 (GYKOV A YU) 30. Juni 1986 (1986-06-30)

## Beschreibung

Die Erfindung betrifft einen Zugenergieabsorber für eine Leichtbaustruktur, insbesondere für Luft-, Raum-, Wasser- sowie Landfahrzeuge nach dem Oberbegriff des Patentanspruch 1. Darüber hinaus hat die Erfindung eine Leichtbaustruktur für Luft-, Raum-, Wasser- sowie Landfahrzeuge zum Gegenstand. Die DE 10 2006 023688 bildet den nächstliegenden Stand der Technik und zeigt einen Zugenergieabsorber gemäß dem Oberbegriff der Ansprüche 1,3, 4, 5, und 6.

Leichtbaustrukturen und insbesondere Rumpfzellenstrukturen für Flugzeuge werden vor allem aus Gründen der Gewichtseinsparung zunehmend aus Faserkunststoffverbunden ("FKV" = Faserkunststoffverbund") gefertigt. Im Vergleich zu Rumpfzellenstrukturen in klassischer Metallbauweise ergibt sich aufgrund der geringen Duktilität und der hohen Steifigkeit von FKV-Bauteilen die Notwendigkeit, zusätzliche Energieabsorber zu verwenden, um Personen- und/oder Sachschäden im Fall eines Unfalls, wie z. B. einer fahrwerklosen, harten Bruchlandung eines Flugzeugs auf einer Landebahn zu vermeiden.

Zugenergieabsorber sind vor allem zur Personenabsicherung im Bergsport und bei professionell arbeitenden Fassadenkletterern bekannt. Diese Zugenergieabsorber sind jedoch nur für verhältnismäßig kleine Zuglasten ausgelegt und zertifiziert.

Aufgabe der Erfindung ist es, einen Zugenergieabsorber zur Erhöhung der Crashsicherheit einer Leichtbaustruktur, insbesondere für Luft-, Raum-, Wasser- sowie Landfahrzeuge, sowie eine zur Vermeidung von Personenschäden weitgehend crashsichere, derartige Leichtbaustruktur anzugeben.

Die erfindungsgemäße Aufgabe wird zunächst durch einen Zugenergieabsorber nach Maßgabe von Patentanspruch 1 gelöst, wonach der Zugenergieabsorber zur Absorption von kinetischer Energie einen Mittelabschnitt mit zwei sich jeweils endseitig daran anschließenden Anbindungsbereichen zur mechanischen Anbindung an die Leichtbaustruktur aufweist, wobei zumindest eine Längsachse des Zugenergieabsorbers parallel zu zwei entgegengesetzt orientierten Zugkräften F_{Zug} verläuft, die beidseitig an den Anbindungsbereichen angreifen. Hierdurch ist eine hohe spezifische Energieabsorptionseffizienz des erfindungsgemäßen Zugenergieabsorbers bei einem zugleich geringen Gewicht gegeben, wobei sich dieser aufgrund seines nur eine geringe Anzahl von Komponenten erfordernden, einfachen Aufbaus im Allgemeinen ohne größere konstruktive Änderungen problemlos in vorhandene Layouts von Leichtbaustrukturen integrieren lässt. Der Zugenergieabsorber ist in der Lage, mechanische (Crash-)Lasten in einem Bereich von einigen wenigen kN bis hin zu 100 kN zuverlässig zu absorbieren. Der Zugenergieabsorber kann hierbei in allen Leichtbaustrukturen für Luft-, Raum-, Land- oder Wasserfahrzeuge zum Einsatz kommen.

Bei einer günstigen nicht erfindungsgemäßen Ausgestaltung des Zugabsorbers ist zumindest der Mittelabschnitt aus einem Metall, insbesondere aus einem duktilen Metall mit einer beispielhaften Bruchdehnung von 40 % bis 80 % mit zugleich hohen Spannungswerten, gebildet. Hierdurch ergibt sich im Vergleich zu konventionellen Metallen oder Metalllegierungen ein ausgezeichnetes Absorptionsvermögen der aufzunehmenden kinetischen Energie.

Bei einer weiteren nicht erfindungsgemäßen Ausführungsform ist zumindest der Mittelabschnitt aus einem Kunststoff gebildet. Hierdurch steht eine andere Werkstoffklasse zur Realisation des Zugenergieabsorbers zur Verfügung. Bevorzugt kommen äußerst duktile Kunststoffe, die eine Bruchdehnung von 100 % bis 200 % aufweisen zum Einsatz. Hierdurch kann im Vergleich zu einer metallischen Lösung ein noch größerer Absorptionsweg bei gleicher Baugröße bereitgestellt werden.

Nach Maßgabe einer nicht erfindungsgemäßen Weiterbildung ist zumindest der Mittelabschnitt aus einem Faserkunststoffverbund gebildet, dessen Verstärkungsfasern jeweils unter von 0° verschiedenen Winkeln zu einer Längsachse verlaufen. Hierdurch ist zunächst ein geringes Gewicht der Zugenergieabsorber bei einer zugleich guten Absorptionseffizienz hinsichtlich der aufzunehmenden Bewegungsenergie gegeben. Unter dem Begriff der "Verstärkungsfaser" ist im Kontext dieser Beschreibung jedes geometrische Objekt zu verstehen, dessen Längserstreckung im Verhältnis zu dessen Quer- und Hocherstreckung groß oder sehr viel größer ist. Die Verstärkungsfasern können aus beliebigen Materialien, wie z. B. Metalldrähten, Metallfasern, Glasfasern, Kohlenstofffasern, Kunststofffasern, Naturfasern etc. oder einer Kombination hiervon bestehen. Als Matrixmaterial zur Einbettung der Verstärkungsfasern kommen beliebige Thermoplaste oder Duroplaste, wie z. B. Polypropylen (PP), Polyethylen (PE), Polyamid (PA), Polyphenylensulfid (PPS), Polyetheretherketon (PEEK), Polyetherimid (PEI), Polyetherketonketon (PEKK) Polyethylenterephthalat (PET), Epoxidharze, BMI-Harze, Phenolharze, Polyurethanharze, Polyesterharze in Betracht. Die Verstärkungsfasern können in einer nahezu beliebigen räumlichen Anordnung, wie z. B. einem Gewebe (Leinwandbindung, Köperbindung, Atlasbindung etc.), einem Geflecht, einem Gewirk, einem Gestrick oder einem geflochtenen Faserschlauch vorliegen.

Die Verstärkungsfaseranordnung ist mit dem thermoplastischen und/oder dem duroplastischen (aushärtbaren) Kunststoff zur Matrixbildung infiltriert, der in Abhängigkeit vom Kunststofftyp ggfls. ausgehärtet wurde. Der Faserkunststoffverbund ist besonders bevorzugt mit einem zähmodifizierten Epoxidharz gebildet, in das möglichst duktile Verstärkungsfasern aus Aramid, UHMWPE ("Ultra-High-Molecular-Weight-Polyethylene") oder LCP ("Liquid Crystal Polymer") eingebettet sind, um zur optimalen Absorption der kinetischen Energie ein genau definiertes Verstärkungsfaser-Matrix-Interface zu schaffen. Die Verstärkungsfasern innerhalb der Verstärkungsfaseranordnung müssen zur Sicherstellung einer hohen Energieabsorptionseffizienz jeweils unter von 0° verschiedenen Winkeln zur Zugbelastungsrichtung bzw. einer Längsachse des Zugenergieabsorbers ausgerichtet sein.

Nach Maßgabe einer weiteren vorteilhaften nicht erfindungsgemäßen Ausgestaltung ist der Mittelabschnitt zumindest abschnittsweise mit einem gewellten Flachmaterial und/oder mit einem gewellten Rohr gebildet. Hierdurch lässt sich ein s. g. Absorptionsweg, d. h. diejenige Strecke, um die sich der Zugenergieabsorber im Crashfall in Längsrichtung ausdehnt bzw. längt, mit höherer Genauigkeit einstellen. Scheitellinien der Wellentäler und der Wellenberge verlaufen jeweils quer zur Längsachse des Zugenergieabsorbers. Die Wellen innerhalb des Flachmaterials und/oder des Rohres des Zugenergieabsorbers können z. B. sinusförmig, halbkreisförmig, dreieckförmig, trapezförmig, rechteckförmig, sägezahnförmig oder eine beliebige Kombination von mindestens zwei der genannten Kurvenformen sein, die sich zumindest abschnittsweise gleichartig wiederholen.

Im Fall einer weiteren vorteilhaften nicht erfindungsgemäßen Ausführungsform weist der Mittelabschnitt zumindest abschnittsweise eine dreieckige, eine mindestens viereckige, eine kreisförmige, eine elliptische, eine ovale, eine kreisringförmige, eine ellipsenringförmige, eine T-förmige, eine Doppel-T-förmige, eine V-förmige, eine U-förmige, eine I-förmige Querschnittsgeometrie oder eine beliebige Kombination von mindestens zwei der genannten Querschnittsgeometrien auf. Hierdurch lassen sich für die Vollmaterialzugenergieabsorber eine Vielzahl von standardisierten Halbzeugen bzw. Profilen einsetzen. Prinzipiell kann der Mittelabschnitt auch mit einem beliebigen Hohlprofil gebildet sein.

Im Fall einer weiteren vorteilhaften nicht erfindungsgemäßen Ausführungsform ist der Mittelabschnitt zumindest abschnittsweise mit einer Vielzahl von im Wesentlichen zueinander parallelen, biegeweichen und hoch duktilen strangförmigen Elementen, insbesondere mit Fasern, mit Garnen, mit Seilen, mit Bändern und/oder mit Faserschlaufen, gebildet.

Hierdurch ist eine besonders präzise Einstellung der Kraft-Weg-Charakteristik des Zugenergieabsorbers, insbesondere über die Anzahl der Stränge, deren Geometrie und/oder deren Materialbeschaffenheit, möglich. Bevorzugt kommen duktile Fasern mit einer hohen Bruchdehnung, wie z. B. Polyesterfasern bzw. -garne, zum Einsatz.

Bei einer weiteren vorteilhaften nicht erfindungsgemäßen Ausführungsform ist vorgesehen, dass der Mittelabschnitt mit einem zumindest abschnittsweise biegeweichen und zugsteifen Gurt gebildet ist, wobei der Gurt zur Bildung mindestens einer Tasche mindestens dreimal oder einem Vielfachen hiervon quer zu einer Längsachse gefaltet ist und Lagen der mindestens einen Tasche miteinander verbunden, insbesondere miteinander vernäht und/oder verwebt, sind. Infolge der sukzessiv aufreißenden Nähte weist das Kraft-Weg-Diagramm dieses Zugenergieabsorbers einen um eine mittlere Zugkraft F_{Mittel} schwingenden Verlauf auf. Beispielsweise lässt sich das Kraft-Weg-Verhalten für den vernähten Gurt sehr gut über die Nahtgeometrie, die Anzahl der Nähte sowie den Garntyp einstellen. Sämtliche Faltlinien verlaufen quer zur Längsachse des Zugenergieabsorbers. Alternativ kann der Gurt abschnittsweise mit einem aushärtbaren Kunststoffmaterial infiltriert werden, das abschließend ausgehärtet wird.

Nach Maßgabe einer Ausführungsform der Erfindung weist der Mittelabschnitt einen Reibkörper, insbesondere einen Zylinder oder einen Kegel, als integrierten Kraftverstärker auf, der quer zur Zugkraft F_{Zug} sowie einer dieser entgegengesetzt orientierten Haltekraft F_{Halte} angeordnet ist und eine Oberfläche des Reibkörpers ist mindestens mit einer Windung eines zumindest abschnittsweise biegeweichen Seils belegt, wobei die Haltekraft F_{Halte} von einem Absorber bereitgestellt wird. Da die Haltekraft F_{Halte} deutlich kleiner als die Zugkraft F_{Zug} ist, ergibt sich je nach Sichtweise eine "Untersetzungswirkung" bzw. eine "Übersetzungswirkung". Hierdurch lässt sich die Kraft-Weg-Charakteristik des Zugenergieabsorbers dahingehend beeinflussen, dass sich in Abhängigkeit von der eingesetzten Materialkombination und/oder der Anzahl der Windungen des Seils auf dem Reibkörper ein besonders hohes Energieabsorptionsvermögen ergibt bzw. das Energieabsorptionsvermögen verstärkt werden kann.

Nach Maßgabe einer Weiterentwicklung weist der Mittelabschnitt mindestens zwei Reibkörper, insbesondere mindestens zwei Zylinder und/oder mindestens zwei Kegel, als integrierte Kraftverstärker auf, wobei Längsmittelachsen der Reibkörper unter Schaffung eines Zwischenraums zur Durchführung eines Seils parallel zu einander verschiebbar sind und jeder Reibkörper mit mindestens einer Windung eines Seils belegt ist. Aufgrund der integrierten Verstärkungsfunktion des Zugenergieabsorbers ist eine Ausleitungskraft stets größer als eine Einleitungskraft. Infolge der geringen Einleitungskraft ergibt sich aufgrund der Seilreibung eine automatische Kraftvergrößerung, da die Reibkörper selbsttätig zunehmend gegeneinander gedrückt bzw. zusammen gezogen werden und hierbei das Seil zwischen sich einklemmen. Vorzugsweise ist zumindest der seileingangsseitige Reibkörper drehfest ausgebildet. Anstelle von mindestens zwei übereinander angeordneten Zylindern als Reibkörper können z. B. auch zwei konzentrische Zylinder Verwendung finden.

Gemäss einer Ausführungsform der Erfindung ist vorgesehen, dass der Mittelabschnitt des Zugenergieabsorbers mit einer Kernverbundplatte gebildet ist, die eine Kernstruktur mit beidseitig aufgebrachten Decklagen aufweist, wobei die Absorption der kinetischen Energie in einer Zone der Kernverbundplatte erfolgt. Hierdurch ist z. B. ein integral zu einer Sandwichplatte ausgebildeter Zugenergieabsorber bzw. eine Sandwichplatte mit integrierter Zugenergieabsorptionsfunktion realisierbar.

Nach Maßgabe einer günstigen Weiterentwicklung ist die Zone der Kernstruktur von einem biegeweichen und zugsteifen Band umschlossen, dessen Oberseite und Unterseite jeweils senkrecht zu den Decklagen verläuft, wobei mittels der am Band angreifenden Zugkräfte F_{Zug} die Kernstruktur innerhalb der Zone zur Energieabsorption ausräumbar ist. Durch das partielle Ausräumen der vom Band umschlossenen Zone der Kernstruktur ist eine effiziente Energieabsorption gegeben.

Gemäß einer weiteren Ausgestaltung ist die Zone der Kernstruktur teilweise von einer biegeweichen und zugsteifen Bandschlaufe umschlossen, wobei mittels der an Enden der Bandschlaufe sowie an der Kernverbundplatte angreifenden Zugkräfte F_{Zug} die Kernstruktur innerhalb der Zone zur Energieabsorption ausräumbar ist. Hierdurch lässt sich ebenfalls die komplette Zugenergieabsorberfunktionalität unmittelbar in eine Bodenplatte in Sandwichbauweise integrieren. Die Enden der Bandschlaufe bilden den einen Anbindungsbereich, während ein diesen gegenüberliegender Randbereich der Kernverbundplatte mit einer geeigneten Verstärkung (Insert, Aufdickung) den weiteren Anbindungsbereich verkörpert.

Nach Maßgabe einer weiteren Ausführungsform ist in die Kernverbundplatte mindestens eine senkrechte Bohrung zur Durchführung jeweils mindestens eines Bolzens eingebracht, wobei der mindestens eine Bolzen in einer Halterung, insbesondere in einer eine Außenkante umgreifenden Gabel, aufgenommen ist, wobei die Energieabsorption im Wesentlichen durch Lochleibungsversagen der Bohrung in den Decklagen innerhalb der Zone der Kernverbundplatte infolge der an der Halterung und im Anbindungsbereich angreifenden Zugkraft F_{Zug} erfolgt. Hierdurch lässt sich gleichfalls die komplette Zugenergieabsorberfunktionalität z. B. unmittelbar in eine Bodenplatte in Sandwichbauweise integrieren. Die z. B. als Gabel ausgeführte Halterung stellt den einen Anbindungsbereich dar, während der weitere Anbindungsbereich in einem der Halterung gegenüberliegenden Randbereich der Kernverbundplatte lokalisiert ist. Alternativ kann der weitere Anbindungsbereich z. B. auch mit einem weiteren Bolzen - der im Crashfall entgegen der Bewegungsrichtung des ersten Bolzens durch die Kernverbundplatte gezogen wird - realisiert sein.

Gemäß einer weiteren Ausgestaltung sind in der Kernverbundplatte mindestens zwei Befestigungsmittel in Bohrungen angeordnet, wobei die Befestigungsmittel jeweils mit einer Lasche verbunden sind und die Energieabsorption im Wesentlichen durch Lochleibungsversagen der Bohrungen in den Decklagen innerhalb der Zone der Kernverbundplatte infolge der an den Laschen angreifenden Zugkräfte F_{Zug} erfolgt. Hierdurch ist eine konstruktiv besonders einfache, auf einer Seite (Decklage) der Kernverbundplatte erfolgende, Einkopplung der Zugkräfte F_{Zug} gegeben.

Nach Maßgabe einer günstigen nicht erfindungsgemäßen Weiterbildung weist der Mittelabschnitt des Zugenergieabsorbers mindestens zwei Reibkörper auf, deren mindestens zwei Reibflächen aneinander liegen, wobei die Reibflächen mittels der an den Reibkörpern angreifenden Zugkräfte F_{Zug} in Relation zueinander zur Energieabsorption bewegbar sind. Hierdurch ist eine konstruktiv besonders flexible Integration des Zugenergieabsorbers in die Leichtbaustruktur gegeben. Die Reibflächen sollten eine möglichst hohe Rauigkeit aufweisen und werden mittels der zueinander weisenden Kräfte F_{Normal} zur Schaffung eines Reibschlusses aneinander gedrückt. Durch eine Variation der Anzahl der Reibkörper, deren Geometrie und Abmessungen sowie deren Materialbeschaffenheit lässt sich das Absorptionsvermögen des Zugenergieabsorbers in weiten Grenzen einstellen. Anstelle von mindestens zwei übereinander angeordneten, z. B. quaderförmigen Reibkörpern können beispielsweise auch zwei konzentrische Zylinder oder Kegel Verwendung finden.

Darüber hinaus wird die erfindungsgemäße Aufgabe durch eine Leichtbaustruktur nach Maßgabe von Patentanspruch 7 gelöst, wonach in die Leichtbaustruktur mindestens ein Zugenergieabsorber zur Absorption von kinetischer Energie in einem Crashfall integriert ist. Hierdurch wird die Gefahr von Personenschäden erheblich reduziert, wenn hohe mechanische Kräfte kurzzeitig auf die Leichtbaustruktur einwirken, wie es z. B. im Fall eines Flugzeug- oder Autounfalls der Fall ist. Die zu absorbierende kinetische Energie wird beispielsweise in Verformungsenergie des mindestens einen Zugenergieabsorbers transformiert. Der oder die Zugenergieabsorber sind hierbei zur Aufnahme von mechanischen (Crash-)Lasten in einem Bereich von einigen wenigen kN bis hin zu 100 kN ausgelegt.

In der Zeichnung zeigt:
- Fig. 1: einen Querschnitt einer Leichtbaustruktur mit einem Zugenergieabsorber in einem Normalzustand,
- Fig. 2: einen Querschnitt der Leichtbaustruktur von Fig. 1 nach einem harten Aufprall auf einen Untergrund bzw. einem Crash, und
- Fig. 3-17: verschiedene Ausführungsformen von Zugenergieabsorbern zur Absorption von kinetischer Energie in einem Crashfall.

In der Zeichnung weisen dieselben konstruktiven Elemente jeweils dieselbe Bezugsziffer auf.

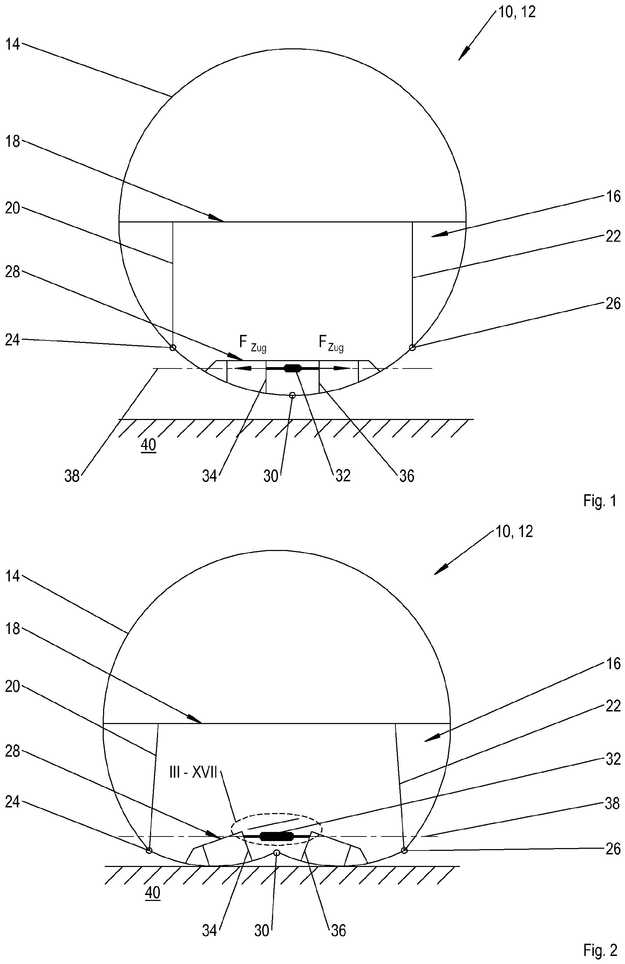

Die Fig. 1 und 2 - auf die im weiteren Fortgang der Beschreibung zugleich Bezug genommen wird - zeigen einen Querschnitt einer Leichtbaustruktur mit einem Zugenergieabsorber in einem Normalzustand und nach einem Crashfall, wie z. B. nach einem harten Aufsetzen eines Flugzeugs auf einer Landebahn.

Eine Leichtbaustruktur 10 ist gemäß Fig. 1 exemplarisch als Rumpfzellenstruktur 12 eines nicht dargestellten Flugzeugs ausgeführt. Die Rumpfzellenstruktur 12 umfasst unter anderem eine Rumpfzellenhaut 14 mit nicht näher dargestellten Ringspanten und Stringern (Hinterbaustruktur) sowie ein Fußbodengerüst 16 mit einem darauf angeordneten Passagierfußboden 18, der über zwei Vertikalstreben 20, 22 in zwei Gelenkpunkten 24, 26 abgefangen ist. Im Bereich eines Frachtraumbodens 28 befindet sich oberhalb eines weiteren Gelenkpunktes 30 im Allgemeinen eine Vielzahl von Zugenergieabsorbern, von denen ein Zugenergieabsorber 32 repräsentativ für die übrigen gezeichnet ist. Der Zugenergieabsorber 32 ist beispielhaft zwischen zwei Vertikalstreben 34, 36 des Frachtraumbodens 28 angeordnet. Eine Längsachse 38 des Zugenergieabsorbers 32 verläuft orthogonal zu einer eingezeichneten Flugzeuglängsachse, die ihrerseits senkrecht zur Zeichenebene verläuft. Entsprechend sind die übrigen Zugenergieabsorber entlang der Flugzeuglängsachse hintereinander versetzt innerhalb der Leichtbaustruktur 10 bzw. der Rumpfzellenstruktur 12 positioniert. Die Zugenergieabsorber dienen zur Absorption der in einem Crashfall freiwerdenden Bewegungsenergie des Flugzeugs. In dem in Fig. 1 illustrierten Normalzustand, d. h. in einem nicht deformierten Zustand der Rumpfzellenstruktur 12, befindet sich diese oberhalb eines Untergrundes 40, wie z. B. einer Landebahn.

Schlägt die Rumpfzellenstruktur 12 beispielsweise - wie z. B. im Fall eines Crashs - hart auf den Untergrund 40 auf, so kommt es ausweislich von Fig. 2 vorrangig zu einer konstruktiv definierten Deformation der Rumpfzellenstruktur 12 im Bereich der drei Gelenkpunkte 24, 26, 30, wobei die freigesetzte Bewegungsenergie der Rumpfzelle 12 vom Zugenergieabsorber 32 sowie von allen weiteren Zugenergieabsorbern zumindest teilweise absorbiert wird. Hierbei werden Zugkräfte F_{Zug} parallel zu einer Längsachse 38 des Zugenergieabsorbers 32 in diesen eingeleitet, wobei die Längsachse 38 des Zugenergieabsorbers senkrecht zur Flugzeuglängsachse verläuft.

Infolge der energieabsorbierenden Wirkung des Zugenergieabsorbers 32 und aller weiteren Zugenergieabsorber wird in Verbindung mit der konstruktiv definierten Deformation der Rumpfzellenstruktur 12 die Gefahr von Personenschäden in einem derartigen Crashfall vermindert. Wie der Darstellung von Fig. 2 entnehmbar ist, wird vor allem eine unkontrollierte Verformung des Fußbodengerüstes 16 und des von diesem getragenen Fußbodens 18 mit den darauf montierten Passagiersitzen vermieden. Der Zugenergieabsorber 32 sowie alle weiteren Zugenergieabsorber nehmen im Crashfall in Abhängigkeit von der Größe und/oder der Masse der Leichtbaustruktur 10 bzw. der kinetischen Energie beispielsweise jeweils Zugkräfte von bis zu 20 kN auf bzw. absorbieren pro Zugenergieabsorber bei einer entsprechenden Verformung (Absorptionsweg) von z. B. 200 mm ca. 4 kJ oder mehr Bewegungsenergie.

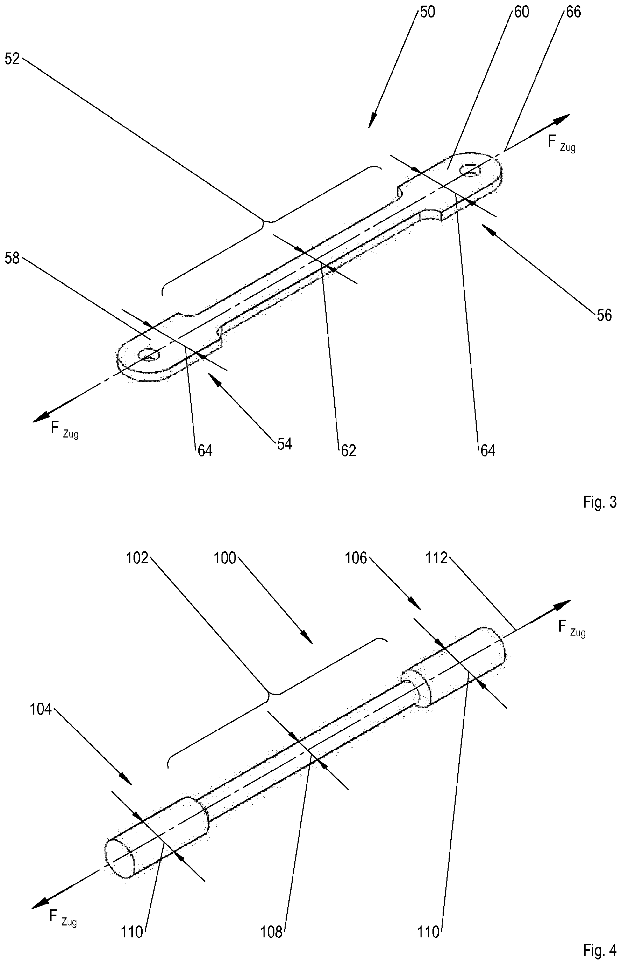

Fig. 3 zeigt eine Ausführungsform eines im Wesentlichen stangenförmigen Zugenergieabsorbers.

Ein einstückig aus einem Vollmaterial gefertigter Zugenergieabsorber 50 umfasst einen Mittelabschnitt 52 und zwei sich daran jeweils endseitig anschließende Anbindungsbereiche 54, 56, an denen die Zugkräfte F_{Zug} angreifen. Die Anbindungsbereiche 54, 56 sind hier lediglich exemplarisch als Befestigungsaugen 58, 60 ausgeführt. Eine Breite 62 des Mittelabschnittes 52 ist bevorzugt jeweils kleiner als eine Breite 64 der beiden Befestigungsaugen 58, 60. Die mechanische Integration des Zugenergieabsorbers 50 in eine Leichtbaustruktur erfolgt mittels der Anbindungsbereiche 54, 56 bzw. mittels der beiden Befestigungsaugen 58, 60 in Verbindung mit z. B. hier nicht eingezeichneten Befestigungsbolzen etc. Die entgegengesetzt (diametral) orientierten Zugkräfte F_{Zug} greifen im Wesentlichen entlang einer Längsachse 66 des Mittelabschnittes 52 bzw. des Zugenergieabsorbers 50 an. Der Mittelabschnitt 52 verfügt hier exemplarisch über eine rechteckförmige Querschnittsgeometrie, kann aber grundsätzlich jede andere, hiervon abweichende Querschnittsgeometrie aufweisen.

Durch eine voneinander weggerichtete Verschiebung der Befestigungsaugen 58, 60 in Relation zueinander entlang der Längsachse 66 (positive Verschiebungsrichtung) kann der Zugenergieabsorber 50 unter Aufnahme der Zugkräfte F_{Zug} durch plastisches Fließen im Bereich seines Mittelabschnittes 52 in effizienter Weise Bewegungsenergie absorbieren. Dieser Vorgang setzt ein, wenn die Zugkräfte F_{Zug}, z. B. im Fall eines Crashs, einen festgelegten Wert F_{Initial} erreichen oder überschreiten.

Zumindest der Mittelabschnitt 52 des Zugenergieabsorbers 50 ist mit einem beliebigen Metall, wie z. B. Stahl, Titan, Aluminium, Kupfer oder einem anderen Metall bzw. Metalllegierung gebildet. Bevorzugt ist der Mittelabschnitt 52 mit einer Stahllegierung gebildet, die einen s. g. "TRIP"- bzw. "TWIP"-Effekt ("TRIP" = Transformation Induced Plasticity, "TWIP" = Twinning Induced Plasticity) zeigt. Derartige Stahllegierungen können Bruchdehnungen von 40 % bis zu 80 % bei gleichzeitig hohen Spannungswerten erreichen, was für den hier gegebenen Zuglastfall und die sich einstellende Kraft-Weg-Charakteristik gerade erwünscht ist, da über einen möglichst langen Weg kinetische Energie über plastische Deformation absorbiert werden kann. Bevorzugte Stahllegierungen sind neben anderen TRIP C1000® sowie die Legierungen TWIP H500®, H800®, H1000® der Fa. "Outokumpu Nirosta GmbH", wobei insbesondere die Legierung TWIP H500® die beste spezifische Energieabsorption des Zugenergieabsorbers 50 unter einer Zugbelastung ermöglicht. Alternativ kann jedes andere Metall oder jede andere Metalllegierung, die über eine hinreichend hohe Duktilität und ausreichende Zugsteife bzw. Festigkeit verfügt, als Material für den Zugenergieabsorber 50 Verwendung finden. Auch ein reiner, nicht faserarmierter Kunststoff, wie z. B. Polyethylen (PE), Polypropylen (PP) oder Polyamid (PA), der eine Bruchdehnung von 100 % bis 200 % aufweist, ist für eine hohe spezifische Energieabsorption des Zugenergieabsorbers 50 denkbar.

Der Anteil an Gleichmaßdehnung in der Spannungs-Dehnungs-Kurve der jeweils eingesetzten Stahllegierung ist von großer Bedeutung und sollte möglichst hoch sein, da der Punkt der Einschnürung für eine ideale Materialausnutzung erst bei sehr hohen Dehnungswerten, kurz vor einem Bruch bzw. Materialversagen auftreten sollte. Bei konventionellen Aluminium- und Titanlegierungen liegt die Bruchdehnung zum Vergleich in einem Bereich von ca. 20 % bis 25 %.

Fig. 4 zeigt eine weitere Ausführungsform eines im Wesentlichen stangenförmigen Zugenergieabsorbers.

Ein ebenfalls einstückig ausgebildeter Zugenergieabsorber 100 umfasst einen Mittelabschnitt 102 mit zwei sich jeweils endseitig daran anschließenden Anbindungsbereichen 104, 106. Im Unterschied zur Ausführungsform von Fig. 3 verfügen der Mittelabschnitt 102 sowie die beiden Anbindungsbereiche 104, 106 jeweils über eine zylindrische Form mit jeweils kreisförmigen Querschnittsgeometrien, wobei ein Durchmesser 108 des Mittelabschnittes 102 bevorzugt jeweils kleiner als ein Durchmesser 110 der Anbindungsbereiche 104, 106 ist. Hiervon abweichende Querschnittsgeometrien sind gleichfalls möglich. Beispielsweise können die Anbindungsbereiche 104, 106 eine eckige Querschnittsgeometrie und der Mittelabschnitt 102 eine z. B. kreisförmige Querschnittsgeometrie oder umgekehrt aufweisen. Die entgegengesetzt orientierten Zugkräfte F_{Zug} greifen erneut entlang einer Längsachse 112 des Mittelabschnitts 102 bzw. des Zugenergieabsorbers 100 an.

Der Zugenergieabsorber 100 ist wiederum bevorzugt mit einer "TRIP"- bzw. "TWIP"-Stahllegierung gebildet, die eine Bruchdehnung im Bereich von 40 % bis 80 % bei einem gleichzeitig hohen Spannungswert aufweist, so dass hinsichtlich der weiteren konstruktiven Einzelheiten des Zugenergieabsorbers 100 auf die Beschreibung des Zugenergieabsorbers 50 in der Fig. 3 verwiesen werden kann.

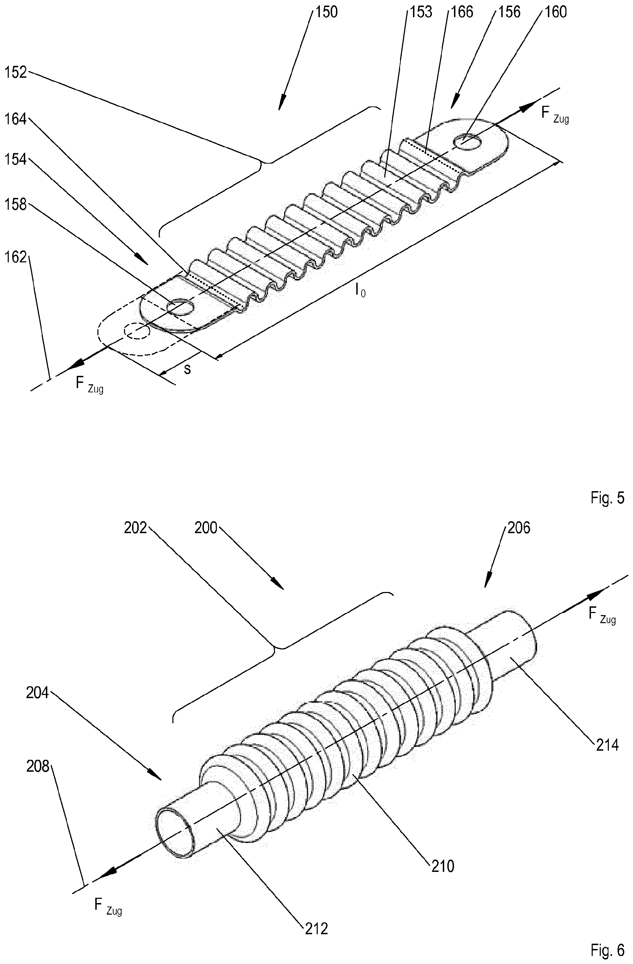

Die Fig. 5 und 6 zeigen ebenfalls im Wesentlichen stangenförmige bzw. längliche Zugenergieabsorber, die jedoch abweichend von den vorstehend erläuterten Ausführungsformen zumindest abschnittsweise gewellt ausgeführt sind.

Ein einstückig ausgebildeter Zugenergieabsorber 150 umfasst gemäß Fig. 5 wiederum einen Mittelabschnitt 152 mit zwei sich daran jeweils endseitig anschließenden Anbindungsbereichen 154, 156, die hier wiederum als Befestigungsaugen 158, 160 ausgeführt sind. Die entgegengesetzt orientierten Zugkräfte F_{Zug} greifen entlang einer Längsachse 162 an. Als ein wesentlicher Unterschied zur Ausführungsform des Zugenergieabsorbers 50 von Fig. 3 ist der Mittelabschnitt 152 hier beispielhaft mit einem halbkreisförmig gewellten Flachmaterial 153 mit einer rechteckförmigen Querschnittsgeometrie gebildet. Scheitellinien sowie Basislinien nicht bezeichneter Wellenberge und Wellentäler verlaufen jeweils quer zur Längsachse 162 des Zugenergieabsorbers 150, wobei lediglich zwei Basis- und Scheitellinien 164, 166 stellvertretend für alle Übrigen mit Bezugsziffern versehen sind.

Unter Einwirkung der Zugkräfte F_{Zug} muss sich der gewellte Mittelabschnitt 152 zunächst durch eine Biegedeformation im Bereich der Scheitel- und Basislinien vollständig entlang der Längsachse 162 strecken und ausrichten, bevor sich das plastisch-dehnende Materialverhalten der in Fig. 3, 4 bereits beschriebenen Absorber 50, 100 zumindest teilweise anschließt.

Ein Vorteil des Zugenergieabsorbers 150 besteht unter anderem darin, dass sich ein Absorptionsweg s, d. h. derjenige Weg, um den sich eine Ausgangslänge l₀ des Zugenergieabsorbers 150 im Crashfall vergrößert, leicht einstellen lässt. Zudem ist die Kraft-Weg-Charakteristik des Zugenergieabsorbers 150 durch eine Modifikation der Wellengeometrie leicht an die zugrunde liegenden konstruktiven Randbedingungen anpassbar und lässt insbesondere ein mehrstufiges bzw. ein wegabhängiges Absorberverhalten zu. Von Nachteil ist lediglich eine durch die initiale Biegedeformation bedingte geringere spezifische Energieabsorption. Grundsätzlich kann der Zugenergieabsorber 150 mit jedem Metall oder jeder Metalllegierung aufgebaut sein, die über eine ausreichend hohe plastische Dehnbarkeit bzw. Verformbarkeit zur anfänglichen Biegedeformation verfügt. Prinzipiell kann der Mittelabschnitt 152 des Zugenergieabsorbers 150 auch teilweise mit einem Faserkunststoffverbund hergestellt sein.

Das gewellte Flachmaterial 153 des Mittelabschnitts 152 ist wiederum bevorzugt mit einer Stahllegierung gebildet, die eine Bruchdehnung von 40 % bis zu 80 % bei einem gleichzeitig hohen Spannungswert aufweist, so dass insbesondere hinsichtlich der Werkstoffzusammensetzung auf die Beschreibung von Fig. 3 verwiesen werden kann.

Die Fig. 6 zeigt gleichfalls einen bevorzugt einstückig aus einem Vollmaterial hergestellten Zugenergieabsorber 200 mit einem gewellten Mittelabschnitt 202 und zwei, sich jeweils endseitig daran anschließenden Anbindungsbereichen 204, 206.

Die entgegengesetzt orientierten Zugkräfte F_{Zug} greifen entlang einer Längsachse 208 des Zugenergieabsorbers 200 bzw. des Mittelabschnittes 202 an.

Im Unterschied zur Ausführungsform von Fig. 5 ist der Mittelabschnitt 202 mit einem gewellten Rohr 210 bzw. einem gewellten Hohlzylinder ausgeführt und die Anbindungsbereiche 204, 206 sind jeweils als (glatte) Rohre 212, 214 bzw. Hohlzylinder ausgebildet. Hinsichtlich der weiteren konstruktiven Einzelheiten des Zugenergieabsorbers 200 und dessen Absorptionsverhalten sei auf die Erläuterungen zu dem Zugenergieabsorber 150 von Fig. 5 verwiesen.

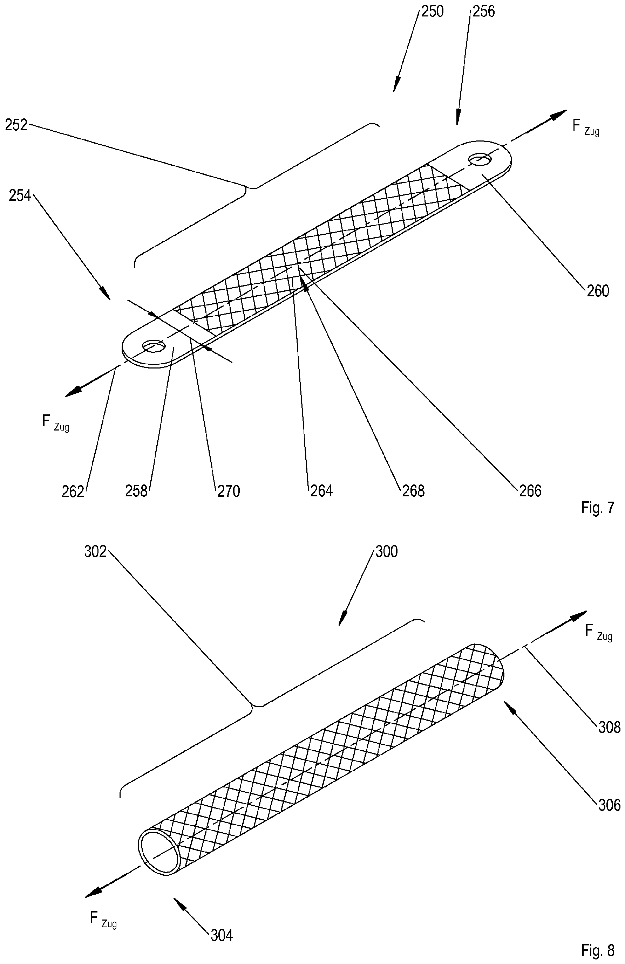

Die Fig. 7 und 8 zeigen gleichfalls im Wesentlichen stangenförmige Zugenergieabsorber, die jedoch abweichend von den vorstehend erläuterten Ausführungsformen zumindest abschnittsweise mit einem Faserkunststoffverbund realisiert sind.

Ein bevorzugt erneut einstückig ausgebildeter Zugenergieabsorber 250 umfasst gemäß Fig. 7 wiederum einen Mittelabschnitt 252 mit zwei sich daran jeweils endseitig anschließenden Anbindungsbereichen 254, 256, die hier ebenfalls mit Befestigungsaugen 258, 260 realisiert sind. Die entgegengesetzt orientierten Zugkräfte F_{Zug} greifen ebenfalls entlang einer Längsachse 262 im Bereich der Befestigungsaugen 258, 260 an. Die Befestigungsaugen 258, 260 sind bevorzugt einstückig zum Mittelabschnitt 252 ausgebildet und stellen kein gesondertes Bauteil dar. Alternativ können die Befestigungsaugen 258, 260 aber auch separate Bauteile sein, die in geeigneter Weise mit dem Mittelabschnitt 252 verbunden sind.

Zumindest der Mittelabschnitt 252 des Zugenergieabsorbers 250 ist mit einem Faserkunststoffverbund gebildet und weist hier lediglich exemplarisch eine annähernd rechteckförmige Querschnittsgeometrie auf. Die eingesetzte Faserarmierung besteht aus einer Verstärkungsfaseranordnung, wie z. B. einem Gewebe (Leinwandbindung, Köperbindung, Atlasbindung etc.), aus einem Geflecht, einem Gewirk oder einem Gestrick, das mit einem thermoplastischen und/oder duroplastischen (aushärtbaren) Kunststoffmaterial zur Matrixbildung infiltriert und in Abhängigkeit vom Kunststofftyp ggfls. ausgehärtet wurde.

Zwei exemplarisch bezeichnete Verstärkungsfasern 264, 266 verlaufen innerhalb der Verstärkungsfaseranordnung des Mittelabschnittes 252 hier jeweils unter Winkeln von ±45° zur Längsachse 262 und queren bzw. überlagern sich in einem Kreuzungspunkt 268. Eine Breite 270 des Zugenergieabsorbers 250 ist über seine gesamte Längserstreckung hinweg annähernd konstant. Prinzipiell kann der Mittelabschnitt 252 in Bezug zu den Befestigungsaugen 258, 260 auch eingeschnürt ausgebildet sein. Von großer Bedeutung für die Effizienz der Energieabsorption ist jedoch, dass die Verstärkungsfasern innerhalb der Verstärkungsfaseranordnung jeweils unter von 0° verschiedenen Winkeln zur Längsachse 262 verlaufen und sich an den Kreuzungspunkten überschneiden (mechanische Verankerung, Formschluss).

Aufgrund der Wirkung der Zugkräfte F_{Zug} kommt es, wenn diese eine konstruktiv festgelegte Kraft F_{Initial} erreichen oder überschreiten, an Kreuzungspunkten der Verstärkungsfasern - wie z. B. im Kreuzungspunkt 268 - innerhalb der Verstärkungsfaseranordnung des Mittelabschnittes 252 zu Matrixbrüchen, wodurch sich die Verstärkungsfasern entlang der Längsachse 262 ausrichten können (s. g. "Schereneffekt"). Durch die Kreuzungspunkte werden die einzelnen Verstärkungsfasern bzw. die Verstärkungsfaserstränge innerhalb der Verstärkungsfaseranordnung des Mittelabschnittes 252 bis zum Erreichen einer maximalen Dehnung bzw. Schwerfestigkeit des Faserkunststoffverbundes - zusammengehalten.

Alternativ zu einer Verstärkungsfaseranordnung aus einem im Wesentlichen planen Gewebe können auch in ein Kunststoffmaterial eingebettete, geflochtene Verstärkungsfasern oder ein plattgedrückter Verstärkungsfaserschlauch (Geflechtschlauch) etc. Verwendung finden. Hierdurch ist die Durchgängigkeit der Verstärkungsfasern zwischen den Anbindungsbereichen 254, 256 gewährleistet, so dass die Übertragung der Zugkräfte F_{Zug} nicht ausschließlich über die Scherfestigkeit zwischen den Verstärkungsfasern und der diese einschließenden Kunststoffmatrix stattfindet.

Das energetische Absorptionsvermögen des Zugenergieabsorbers 250 ist von der Interaktion zwischen den Verstärkungsfasern und der diese einschließenden Matrix abhängig. Die Anbindung der Matrix an die Verstärkungsfasern muss dabei stark genug sein, um die im Normalbetrieb auftretenden Zugkräfte F_{Betrieb} sicher zu übertragen, andererseits muss dieses Interface jedoch im Bereich der Kraft F_{Initi-al}, die unterhalb der Scherfestigkeit des Mittelabschnittes 252 liegt, kontrolliert versagen. Infolge dessen können sich die Verstärkungsfasern langsam parallel zur Längsachse 262 ausrichten, so dass kein abrupter Sprödbruch des Faserkunststoffverbundes erfolgt. Vorteilhafte Kombinationen von Verstärkungsfasern und Matrixkunststoff sind vor allem z. B. Verstärkungsfasern aus Aramid in Kombination mit einem zähmodifizierten Epoxidharz (definierte Verstärkungsfaser-Matrix-Anbindung).

Die in Fig. 8 illustrierte weitere Ausführungsform eines Zugenergieabsorbers 300 umfasst einen Mittelabschnitt 302 mit zwei sich daran jeweils endseitig anschließenden Anbindungsbereichen 304, 306 entlang einer Längsachse 308. Die Verstärkungsfaseranordnung des Mittelabschnittes 302 kann z. B. mit einem durchgehenden Gewebeschlauch aus Verstärkungsfasern gebildet sein. Im Unterschied zur Ausführungsform des Zugenergieabsorbers 250 nach Fig. 7 weist der Mittelabschnitt 302 im Wesentlichen eine hohlzylindrische Querschnittsgeometrie auf. Im Übrigen ist zumindest der Mittelabschnitt 302 ebenfalls zumindest abschnittsweise mit einem Faserkunststoffverbund gebildet, so dass an dieser Stelle auf die Ausführungen im Rahmen der Beschreibung von Fig. 7 verwiesen werden kann.

Grundsätzlich können die Zugenergieabsorber gemäß der Fig. 3 bis 8 mit Metallen, mit verstärkungsfaserfreien Kunststoffen oder mit sämtlichen Arten von Faserkunstoffverbunden oder einer beliebigen Kombination der genannten Materialien gebildet sein.

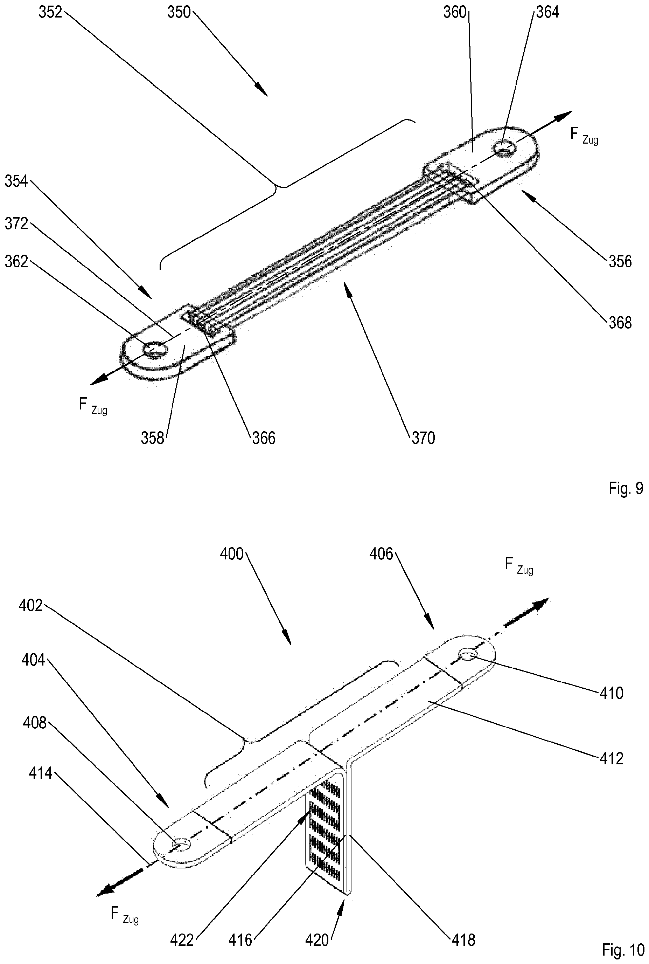

Die Fig. 9 zeigt eine weitere Ausführungsform eines Zugenergieabsorbers unter Verwendung von strangförmigen Elementen.
Ein Zugenergieabsorber 350 umfasst einen Mittelabschnitt 352 mit zwei sich daran jeweils endseitig anschließenden Anbindungsbereichen 354, 356. Die diametral gegenüberliegenden Anbindungsbereiche 354, 356 sind hier lediglich exemplarisch als ungefähr halbovale Beschläge 358, 360 mit jeweils einem kreisförmigen Befestigungsauge 362, 364 und einer in etwa rechteckförmigen Ausnehmung 366, 368 ausgeführt. Durch die Ausnehmungen 366, 368 sind biegeweiche, strangförmige Elemente 370, wie z. B. Fasern, Garne oder Faserschlaufen aus Metallen und/oder Kunststoffen geführt bzw. gespannt, die den eigentlichen energieabsorbierenden Mittelabschnitt 352 des Zugenergieabsorbers 350 darstellen. Die strangförmigen Elemente 370 des Mittelabschnitts 352 verlaufen im Wesentlichen parallel zu einer Längsachse 372 des Zugenergieabsorbers 350 einschließlich seiner Anbindungsbereiche 354, 356 bzw. der Beschläge 358, 360.

Wenn die einwirkenden Zugkräfte F_{Zug} den Wert F_{Initial} erreichen oder überschreiten, beginnt der Zugenergieabsorber 350 kinetische Energie zu absorbieren. Die Kraft-Weg-Charakteristik bzw. die Kraft-Weg-Kennlinie des Zugenergieabsorbers 350 und damit der Umfang der Energieabsorption sind unter anderem abhängig von der konstruktivgeometrischen Gestaltung der strangförmigen Elemente 370 sowie von deren Materialbeschaffenheit. Für den Fall, dass die strangförmigen Elemente 370 z. B. aus einem Metall hergestellt sind, erfolgt die Energieabsorption vorrangig durch plastisches Fließen, während bei strangförmigen Elementen 370 aus einem Kunststoffmaterial die Energieabsorption primär durch eine Ausrichtung der Molekülketten entlang der Längsachse 372 geschieht. Die als strangförmige Elemente 370 dienenden Fasern, Garne oder Faserschlaufen müssen unter Zugbelastung eine ausreichend hohe Duktilität aufweisen, um ein ausreichendes energetisches Absorptionsvermögen zu gewährleisten.

Um insbesondere die strangförmigen Elemente 370 vor nachteiligen Umwelteinflüssen, wie z. B. Feuchtigkeit, UV-Strahlung, etc. zu schützen, können diese hermetisch eingekapselt sein. Die strangförmigen Elemente 370 können z. B. mit Kunststoffgarnen aus Polyethylen (PE), Polypropylen (PP), Polyamid (PA) oder Polyestern (z.B. PBT, PET, PTT, PEN, PC, UP) hergestellt sein. Alternativ oder ergänzend können die strangförmigen Elemente 370 zumindest teilweise mit Metallfasern gefertigt sein, wenn diese über ein hinreichend hohes plastisches Dehnungsvermögen verfügen.

Die Fig. 10 zeigt eine weitere Ausführungsform eines Zugenergieabsorbers unter Verwendung eines biegeweichen, mit Kunststoff gebildeten Gurtes.

Ein Zugenergieabsorber 400 umfasst einen Mittelabschnitt 402 mit zwei sich daran jeweils endseitig anschließenden Anbindungsbereichen 404, 406. Die Anbindungsbereiche 404, 406 sind hier lediglich exemplarisch als Befestigungsaugen 408, 410 für nicht dargestellte Befestigungsbolzen etc. ausgebildet. Zumindest der Mittelabschnitt 402 des Zugenergieabsorbers 400 ist mit einem biegeweichen Gurt 412 mit einer näherungsweise rechteckförmigen Querschnittsgeometrie oder einer anderen vieleckigen Querschnittsgeometrie gebildet. Der Gurt 412 selbst kann mit einer beliebigen räumlichen Anordnung von Kunststofffasern, z. B. in der Form eines Gewebes, Geflechts oder dergleichen, gebildet sein, die z. B. aus Polyethylen (PE), Polypropylen (PP), Polyamid (PA), UHMWPE oder Polyester bestehen. Vorzugsweise ist der Zugenergieabsorber 400 einstückig aus dem biegeweichen Gurt 412 gebildet, d. h. die Anbindungsbereiche 404, 406 bzw. die Befestigungsaugen 408, 410 sind integral zum Gurt 412 ausgeführt bzw. integrale Bestandteile desselben.

Der Gurt 412 ist im Bereich seines Mittelabschnittes 402 hier exemplarisch derart quer zu einer Längsachse 414 gefaltet, dass zwei parallel aneinander liegende Lagen 416, 418 eine Schlaufe 420 bilden, die ungefähr senkrecht zur Längsachse 414 verläuft. Die beiden Lagen 416, 418 sind, insbesondere durch eine Vernähung 422 oder dergleichen, fest miteinander verbunden. Alternativ können die Lagen 416, 418 auch miteinander verwebt oder auf andere Art und Weise verbunden sein. Weiterhin kann der Gurt 412 so gefaltet sein, dass mehrere Schlaufen in der Art der Schlaufe 420 vorhanden sind. Darüber hinaus können die Schlaufen des Gurtes 412 - wie gezeigt lediglich einseitig - oder auch beidseitig ausgeführt sein.

Die Zugkräfte F_{Zug} richten den Zugenergieabsorber 400 entlang seiner Längsachse 414 aus, wobei die Vernähung 422 und/oder die Verwebung des Gurtes 412 sukzessive aufreißt, wenn die Initialkraft F_{Initial} überschritten wird. Über die Art der Vernähung, die Nahtgeometrie, insbesondere den Nahtabstand sowie die Stichweite, Typ und Material des Nähgarns lässt sich entsprechend der Randbedingungen die gewünschte Kraft-Weg-Charakteristik bzw. Kennlinie präzise einstellen. Infolge des sukzessiven Aufreißens der Vernähung 422 und/oder Verwebung weist die Kraft-Weg-Kennlinie einen um eine mittlere Kraft F_{Mittel} schwingenden Verlauf auf. Über die Wahl der Nahtgeometrie, wie z. B. einen Zick-Zack-Stich oder einen Geradstich, lässt sich darüber hinaus die Kraft-Weg-Charakteristik des Zugenergieabsorbers 400 in weiten Grenzen exakt einstellen, wobei zugleich eine Schwingungsamplitude um die mittlere Kraft F_{Mittel} reduziert werden kann. Zudem ist es möglich, z. B. über die Anzahl der Nähte sowie deren Gruppierung z. B. in parallelen Nahtreihen innerhalb der Vernähung 422 und/oder der Verwebung die Kraft-Weg-Charakteristik geeignet zu beeinflussen.

Zum Schutz vor schädlichen Umwelteinflüssen, wie z. B. Feuchtigkeit, UV-Strahlung, korrosiven Medien, kann zumindest der Mittelabschnitt 402 mittels einer Hülle, Haube, Einhausung oder dergleichen hermetisch dicht eingekapselt sein. Prinzipbedingt verfügt der Gurt 412 über eine höhere mechanische Zugfestigkeit als die Vernähung 422 und/oder die Verwebung, die zum Zusammenhalten der einzelnen Lagen 416, 418 des Mittelabschnitts 402 notwendig ist.

Darüber hinaus ist es möglich, den Gurt 412 im Anbindungsbereich 404 mit einem aushärtbaren Kunststoffmaterial, wie z. B. einem Epoxidharz, zu tränken und mit einer Rumpfzellenstruktur eines Flugzeugs oder einer anderen Leichtbaustruktur aus einem möglichst adhäsiv kompatiblen Faserkunststoffverbund zu vernähen und den so durchtränkten Anbindungsbereich 404 des Gurtes 412 anschließend auszuhärten. In einer solchen Konstellation ist z. B. das (vordere) Befestigungsauge 408 im Anbindungsbereich 404 entbehrlich. Der hiervon wegweisende Anbindungsbereich 406 des Gurtes 412 wird biegeweich belassen und kann mittels seines (hinteren) Befestigungsauges 410 und eines Bolzens ebenfalls an die Rumpfzellenstruktur des Flugzeugs oder eine andere Leichtbaustruktur angebunden werden. In einem Crashfall reißen die Kräfte F_{Zug} den ausgehärteten und mit der Rumpfzellenstruktur vernähten Gurt 412 dann von dieser ab.

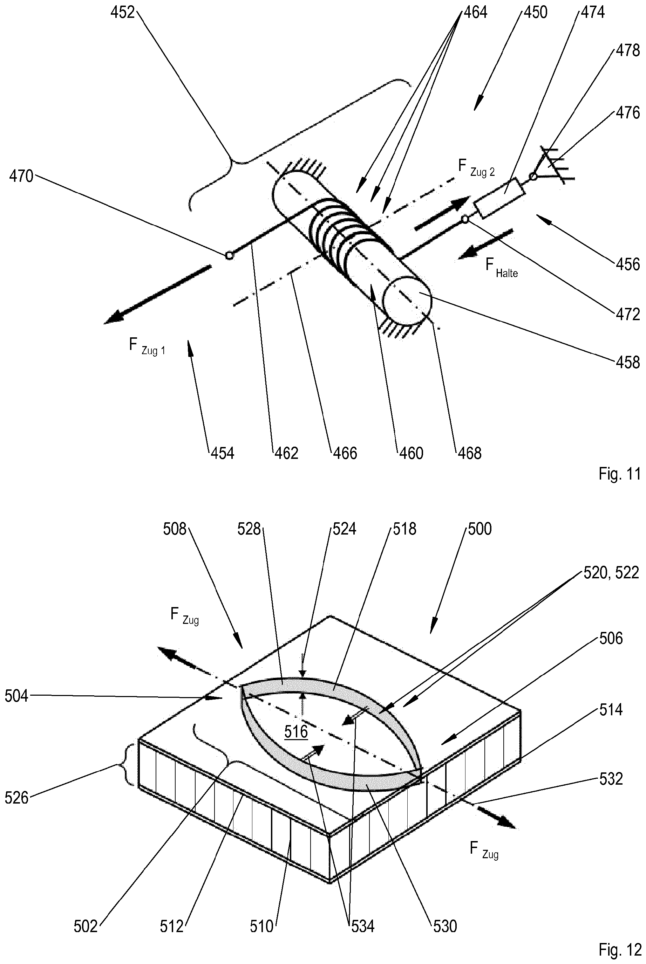

Die Fig. 11 illustriert eine weitere Ausführungsform eines Zugenergieabsorbers unter Ausnutzung der Reibung eines Zugseils an einem Reibkörper als "integrierter Verstärker".

Ein Zugenergieabsorber 450 umfasst unter anderem einen Mittelabschnitt 452 mit zwei sich daran jeweils endseitig anschließenden Anbindungsbereichen 454, 456. In dem Mittelabschnitt 452 befindet sich ein drehfester Reibkörper 458, der hier lediglich exemplarisch mit einem Zylinder gebildet ist, auf dessen Oberfläche 460 ein biegeweiches Seil 462 in mindestens einer Windung 464 abgelegt ist. Das Seil 462 verläuft außerhalb der Windungen 464 ungefähr parallel zu einer Längsachse 466 des Zugenergieabsorbers 450 und eine Längsmittelachse 468 des Reibkörpers 458 verläuft quer zu dieser. Ferner sind die beiden Anbindungsbereiche 454, 456 des Zugenergieabsorbers 450 jeweils parallel zur Längsachse 466 orientiert.

Gemäß der "Euler-Eytelwein"-Gleichung ist die Zugkraft F_{Zug1} abhängig von dem Haft- bzw. dem Gleitreibungskoeffizienten zwischen dem Seil 462 und der Oberfläche 460 des Reibkörpers 458, der Anzahl der Windungen 464 des Seils 462 sowie der Haltekraft F_{Halte}, die gleich der Zugkraft F_{Zug2} ist bzw. dieser entspricht. Daher ergibt sich - jeweils in Abhängigkeit von der gewählten Materialkombination und/oder der Anzahl der um den Reibkörper 458 geschlungenen Windungen 464 des Seils 462 - bei einer vergleichsweise kleinen Haltekraft F_{Halte} eine in der Regel deutlich höhere resultierende Zugkraft F_{Zug1} (F_{Zug1} >> F_{Halte}).

Der Anbindungsbereich 454 ist durch ein Ende 470 des Seils 462 repräsentiert, während ein anderes Ende 472 des Seils 462 mittels eines Absorbers 474 an ein Widerlager 476 angekoppelt ist, wobei ein dem Widerlager 476 zugewandter Endabschnitt 478 des Absorbers 474 den zweiten Anbindungsbereich 456 darstellt. Bei dem Widerlager kann es sich z. B. um eine beliebige Leichtbaustruktur oder dergleichen handeln.

Der (Zugenergie-)Absorber 474 generiert eine konstante Haltekraft F_{Halte} und ermöglicht gleichzeitig eine Längsverschiebung des Seils 462 parallel zur Längsachse 466. Der Absorber 474 kann z. B. entsprechend einer der im Rahmen dieser Beschreibung beispielhaft erläuterten Ausführungsformen von Zugenergieabsorbern für kinetische Energie realisiert sein.

Die von dem Absorber 474 bereitgestellte Haltekraft F_{Halte} bzw. die Zugkraft F_{Zug2} wird mittels der am Reibkörper 458 bestehenden Seilreibung beträchtlich verstärkt, so dass dieser als ein integraler Bestandteil des Zugenergieabsorbers 450 bei gleichbleibendem (Absorptions-)Weg eine wesentlich höhere resultierende Zugkraft F_{Zug1} erbringt und somit das Energieabsorptionsvermögen des Zugenergieabsorbers 450 insgesamt erhöht wird. Der Energieabsorptionsmechanismus beruht hier im Wesentlichen auf Reibung. Das Seil 462 sollte für eine möglichst effektive Energieabsorption zudem über eine möglichst hohe Steifigkeit verfügen.

Die Fig. 12 zeigt eine weitere Ausführungsform eines Zugenergieabsorbers, der auf dem Prinzip des bereichsweisen Ausräumens einer Kernverbund- bzw. Sandwichplatte basiert.

Ein Zugenergieabsorber 500 umfasst einen Mittelabschnitt 502 mit zwei sich daran jeweils endseitig anschließenden Anbindungsbereichen 504, 506. Der Mittelabschnitt 502 weist eine Kernverbundplatte 508 auf, deren Kernstruktur 510 beidseitig mit Decklagen 512, 514 belegt ist. Eine hier lediglich exemplarisch ungefähr elliptische Zone 516 ist von einem Band 518 allseitig umschlossen. Grundsätzlich kann die (Räum-)Zone 516 jede denkbare geometrische Gestalt aufweisen. Eine Ober- und eine Unterseite 520, 522 des Bandes 518 verläuft jeweils senkrecht zu den Decklagen 512, 514, um die Kernstruktur 510 der Kernverbundplatte 508 im Bereich der Zone 516 im Fall eines Crashs möglichst vollständig auszuräumen bzw. beidseitig von den Decklagen 512, 514 abscheren (abschälen) zu können. Eine Höhe 524 des Bandes 518 ist hierbei kleiner oder gleich einer Höhe 526 der Kernstruktur 510. Symmetrisch zu einer Längsachse 532 liegende Längsabschnitte 528, 530 des Bandes 518 werden durch die diametral am Band 518 angreifenden Zugkräfte F_{Zug} - wie mit den beiden kleinen schwarzen, entgegengesetzt gerichteten Pfeilen 534 angedeutet - im Crashfall quer zur Längsachse 532 unter gleichzeitiger Dehnung der Zone 516 in Richtung der Längsachse 532 zusammen gezogen. Infolge dieses Prozesses wird Material der Kernstruktur 510 im Bereich der Zone 516 verdrängt, kompaktiert und von den Decklagen 512, 514 abgeschert, so das zumindest ein Teil der in den Zugenergieabsorber 500 eingetragenen kinetischen Energie absorbiert wird.

Der Hauptvorteil dieser Ausführungsform ist darin zu sehen, dass der Zugenergieabsorber 500 integraler Bestandteil der Kernverbundplatte 508 ist und dieser damit eine Doppelfunktionalität inne wohnt. Denn unter anderem für Fußböden in Passagierkabinen und in Frachträumen von Luft- und Raumfahrzeugen sind derartige Kernverbundplatten 508 ohnehin in großer Zahl notwendig, so dass sich die Option zur zumindest teilweisen Absorption von Crashenergien mit derartigen Zugenergieabsorbern in Plattenbauart weitgehend gewichtsneutral umsetzen lässt.

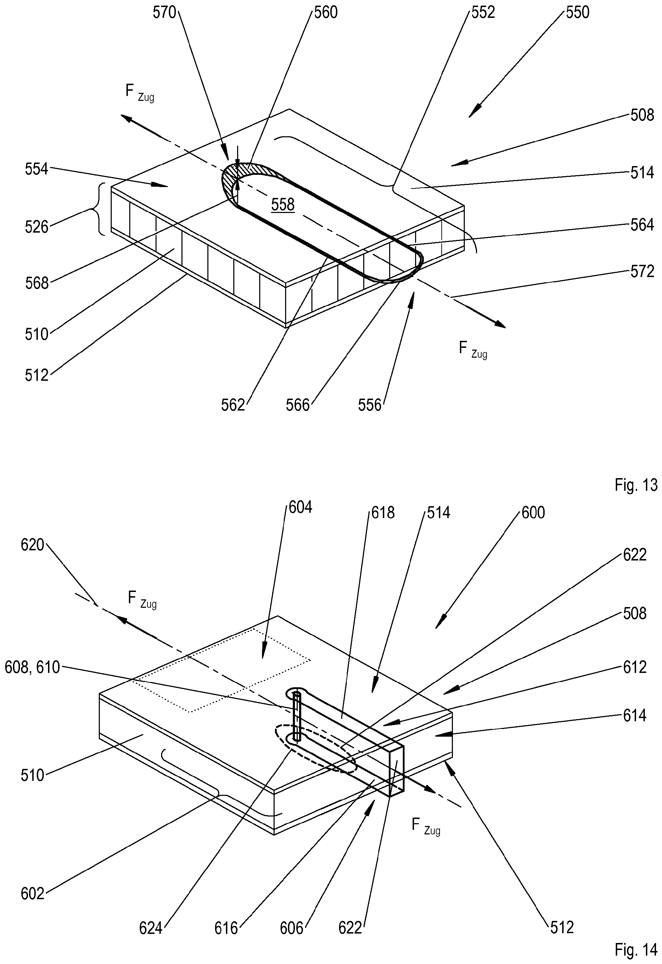

Die Fig. 13 zeigt eine weitere Ausführungsform eines Zugenergieabsorbers mit der Kernverbundplatte aus der Fig. 12.

Ein Zugenergieabsorber 550 umfasst einen Mittelabschnitt 552 mit zwei sich daran jeweils endseitig anschließenden Anbindungsbereichen 554, 556. Eine innerhalb der von den Decklagen 512, 514 überzogenen Kernstruktur 510 der Kernverbundplatte 508 liegende Zone 558 (vgl. insb. Fig. 12) ist teilweise von einer biegeweichen Bandschlaufe 560 umschlossen. Beide Enden 562, 564 der Bandschlaufe 560 bilden den Anbindungsbereich 556 zur Anbindung des Zugenergieabsorbers 550 an eine Leichtbaustruktur bzw. zur Überleitung der Zugkraft F_{Zug} in diese. Alternativ können die Enden 562, 564 zu einem Zugband 566 oder dergleichen als ein zentraler Angriffs- bzw. Anbindungspunkt für die Zugkraft F_{Zug} zusammengeführt sein. Der andere, hiervon weggerichtete Anbindungsbereich 554 kann z. B. ein nicht dargestelltes Insert, eine Aufdickung der Decklagen 512, 514 oder dergleichen zur lokalen Verstärkung der Kernverbundplatte 508 aufweisen. Mit Hilfe der beiden diametral zueinander angeordneten Anbindungsbereiche 554, 556 erfolgt die problemlose Integration des Zugenergieabsorbers 550 in eine Leichtbaustruktur, insbesondere in eine Rumpfzellenstruktur, bzw. die Einleitung der Zugkräfte F_{Zug} in diese. Eine Höhe 568 der Bandschlaufe 560 ist zumindest in einem, von beiden Enden 562, 564 weggerichteten Räumabschnitt 570 kleiner oder gleich der Höhe 526 der Kernstruktur 510. Eine Längsachse 572 des Zugenergieabsorbers 550 verläuft parallel und mittig zwischen den Enden 562, 564 sowie mittig zum Räumabschnitt 570 der Bandschlaufe 560, so dass die Zugkräfte F_{Zug} entlang der Längsachse 572 optimal angreifen können.

Wenn die Zugkräfte F_{Zug} z. B. in einem Crashfall den konstruktiv festgelegten Initialwert F_{Initial} überschreiten, wird die Bandschlaufe 560 zumindest innerhalb der Zone 558 unter hohem Energieeinsatz durch die Kernstruktur 510 der Kernverbundplatte 508 gezogen und absorbiert hierbei zumindest einen Teil der anfallenden kinetischen Energie. Bei diesem Prozess wird die von der Bandschlaufe 560 umschlossene Zone 558 der Kernstruktur 510 im Idealfall vollständig abgeschert bzw. ausgeräumt.

Die Fig. 14 illustriert eine weitere Ausführungsform eines Zugenergieabsorbers mit der Kernverbundplatte von Fig. 12.
Ein Zugenergieabsorber 600 umfasst einen Mittelabschnitt 602 mit zwei sich daran jeweils endseitig anschließenden Anbindungsbereichen 604, 606. In einer senkrechten, bevorzugt zylindrischen Bohrung 608 in der Kernverbundplatte 508 ist ein Bolzen 610 angeordnet, der seinerseits in einer Halterung zur Einleitung der einen Zugkraft F_{Zug} aufgenommen ist. Die andere, entgegengesetzt orientiere Zugkraft F_{Zug} wird in den von der Halterung weggerichteten Anbindungsbereich 604 bzw. den zugehörigen Randbereich der Kernverbundplatte 508 direkt oder über einen zweiten Bolzen, der in die entgegengesetzte Richtung gezogen wird, eingeleitet.

Die Halterung selbst ist hier lediglich exemplarisch mit einer Gabel 612 realisiert, die die Kernverbundplatte 508 im Bereich einer vom Anbindungsbereich 604 weggerichteten Außenkante 614 randseitig umgreift. Zwei Gabelschenkel 616, 618 verlaufen parallel zu einer Längsachse 620 des Zugenergieabsorbers 600 bzw. zu beiden Decklagen 512, 514 der Kernverbundplatte 508 und ein Quersteg 622 der Gabel 612 liegt innerhalb des Anbindungsbereichs 606 in etwa mittig in Bezug zur Längsachse 620 und verläuft hier zudem parallel zur Außenkante 614. Die mechanische Einbindung des Zugenergieabsorbers 600 in eine Leichtbaustruktur bzw. die Einleitung der Zugkräfte F_{Zug} erfolgt mittels des Anbindungsbereichs 604 sowie des Querstegs 622 innerhalb des Anbindungsbereichs 606.

Wenn die Zugkräfte F_{Zug} im Crashfall den konstruktiv festgelegten Wert F_{Initial} überschreiten, wird der Bolzen 610 innerhalb einer (Räum-)Zone 624 unter hohem Energieeinsatz durch die Decklagen 512, 514 einschließlich der Kernstruktur 510 der Kernverbundplatte 508 entlang der Längsachse 620 in Richtung der Außenkante 614 gezogen. Die in einem Crashfall anfallende Bewegungsenergie wird vom Zugenergieabsorber 600 hierbei primär durch Lochleibungsversagen bzw. Lochleibungsprozesse der Bohrung 608 innerhalb der Zone 624 der beiden Decklagen 512, 514 der Kernverbundplatte 508 absorbiert.

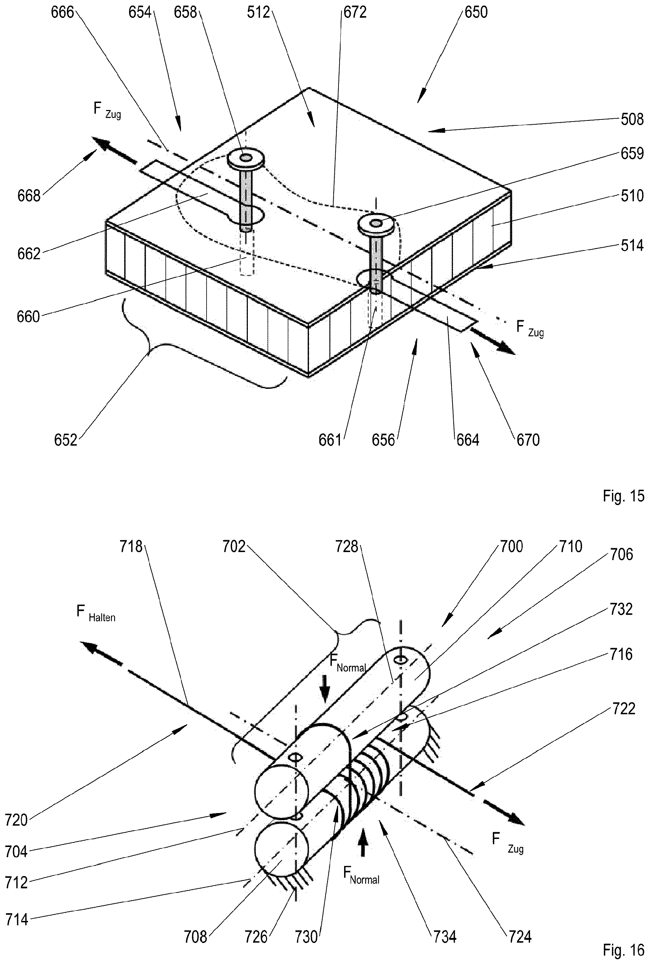

Die Fig. 15 zeigt eine weitere Ausführungsform eines Zugenergieabsorbers mit der Kernverbundplatte von Fig. 12.
Ein Zugenergieabsorber 650 umfasst einen Mittelabschnitt 652 mit zwei sich daran jeweils endseitig anschließenden Anbindungsbereichen 654, 656. In die Kernverbundplatte 508 sind zwei Befestigungsmittel 658, 659, wie z. B. Inserts, Bolzen, Hülsen, Schrauben, lokale Verstärkungen etc. jeweils in eine Bohrung 660, 661 eingesetzt. Im Bereich mindestens einer Decklage 512, 514 der Kernstruktur 510 befinden sich zwei z. B. rechteckförmige Laschen 662, 664, die mit jeweils einem der Befestigungsmittel 658, 659 verbunden sind und die entlang einer Längsachse 666 ausgerichtet sind. Die Laschen 662, 664 können mit einem metallischen Material, mit einem nicht-faserarmierten Kunststoff, mit einem Faserkunststoffverbund oder mit einer Kombination von mindestens zwei der genannten Werkstoffe gebildet sein. An von den Befestigungsmitteln 658, 659 jeweils weggerichteten Enden 668, 670 der beiden Laschen 662, 664 greifen die entgegengesetzt orientiertem Zugkräfte F_{Zug} an. Im Fall eines Crashs werden die Decklagen 512, 514 innerhalb der punktiert angedeuteten Zone 672 durch Lochleibungsversagen der Bohrungen 660, 661 aufgerissen, wodurch zumindest die Absorption eines Teils der abzubauenden Bewegungsenergie erfolgt. Zugleich werden die Befestigungsmittel 658, 659 durch die Kernstruktur 510 gezogen, wobei deren Energieabsorptionsanteil jedoch im Verhältnis zum Anteil der Decklagen 512, 514 vernachlässigbar ist. Mithilfe der beiden Laschen 662, 664 der Anbindungsbereiche 654, 656 erfolgt zugleich die strukturelle Integration des Zugenergieabsorbers 650 innerhalb einer Leichtbaustruktur.

Die Fig. 16 illustriert eine weitere Ausführungsform eines Zugenergieabsorbers unter Ausnutzung der Reibung eines Zugseils zwischen zwei selbsthemmenden Reibkörpern als "integrierter Verstärker".

Ein Zugenergieabsorber 700 umfasst einen Mittelabschnitt 702 mit sich daran jeweils endseitig anschließenden Anbindungsbereichen 704, 706. In dem Mittelabschnitt 702 befinden sich ein unterer und ein oberer Reibkörper 708, 710, die hier exemplarisch zylindrisch ausgebildet sind. Längsmittelachsen 712, 714 der Reibkörper 708, 710 verlaufen parallel zueinander, wobei zwischen nicht bezeichneten Mantelflächen der Reibkörper 708, 710 ein Zwischenraum 716 zur Durchführung eines Seils 718 verläuft. Zumindest der eingangsseitige (untere) Reibkörper 708 ist drehfest ausgeführt. Beide Enden 720, 722 des Seils 718 bilden die eigentlichen Anbindungsbereiche 704, 706 des Zugenergieabsorbers 700 und verlaufen in etwa parallel zu einer Längsachse 724 des Zugenergieabsorbers 700, entlang der die Kräfte F_{Zug} und F_{Halte} in entgegengesetzter Richtung angreifen. Die beiden Reibkörper 708, 710 sind entlang von zwei Führungen 726, 728 bzw. Linearführungen parallel zueinander verschiebbar, wodurch sich der Zwischenraum 716 verkleinert oder vergrößert. Die Führungen 726, 728 verlaufen jeweils senkrecht zu den Längsmittelachsen 712, 714 der beiden Reibkörper 708, 710.

Das Seil 718 ist ausgehend vom Ende 720, an dem die Kraft F_{Halte} angreift, in den Zwischenraum 716 eingeführt. Mindestens eine Windung 730 des Seils 718 umschlingt zunächst den unteren Reibkörper 708 im Uhrzeigersinn, läuft dann zum oberen Reibkörper 710 und umschlingt diesen mit einer halben Windung 732 im Uhrzeigersinn. Anschließend wird das Seil 718 wieder zurück zum unteren Reibkörper 708 geführt und umschlingt diesen z. B. mit drei, vier, fünf oder mehr, nicht einzeln bezeichneten Windungen 734 im Uhrzeigersinn und verlässt den Zwischenraum 716 oberhalb des unteren Reibkörpers 708. Das Ende 722 des Seils 718 bildet hierbei den Anbindungsbereich 706, in dem die Zugkraft F_{Zug} in entgegengesetzter Richtung zur Kraft F_{Halte} angreift.

Wenn im Crashfall die Kräfte F_{Halte} und F_{Zug} auf den Zugenergieabsorber 700 einwirken, bewegen sich die Reibkörper 708, 710 aufgrund der erfindungsgemäßen Seilführung mit den Windungen 730 bis 734 auf den vertikalen Führungen 726, 728 stetig aufeinander zu, wodurch sich der Zwischenraum 716 sukzessive verkleinert und das Seil 718 aufgrund der sich zugleich aufbauenden Normalkräfte F_{Normal} im Sinne einer positiven Rückkopplung zunehmend stärker eingeklemmt wird. Auch hier gilt F_{Halte} << F_{Zug}, d. h. die Ausleitungskraft F_{Zug} ist deutlich größer als die notwendige Einleitungskraft F_{Halte} bzw. durch den "Selbsthemmungseffekt" ist keine weitere definierte Haltekraft F_{Halte} mehr notwendig.

Durch die selbsthemmende Wirkung der Seilführung zwischen den Reibkörpern 708, 710 und den sich hieraus ergebenden, sehr hohen Reibungskräften weist der Zugenergieabsorber 700 ein besonders hohes spezifisches Energieabsorptionsvermögen auf.

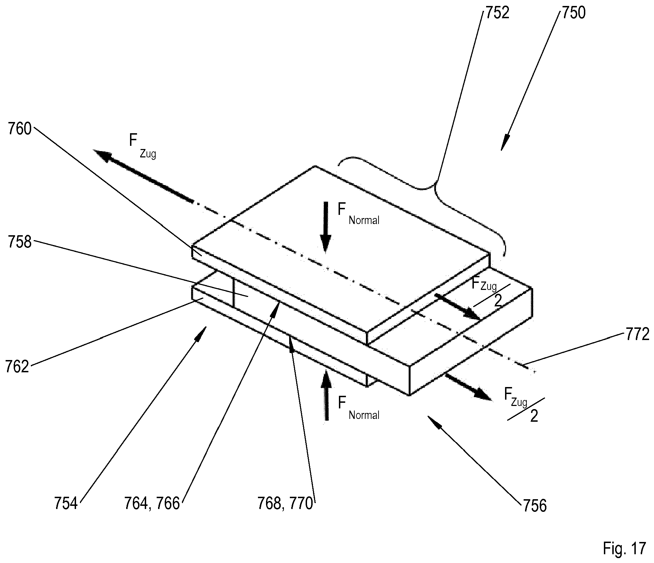

Die Fig. 17 veranschaulicht eine weitere Ausführungsform eines Zugenergieabsorbers unter Verwendung von aneinander reibenden Körpern bzw. Reibkörpern.

Ein Zugenergieabsorber 750 umfasst einen Mittelabschnitt 752 mit zwei sich daran jeweils endseitig anschließenden Anbindungsbereichen 754, 756. Im Bereich des Mittelabschnitts 752 ist ein Reibkörper 758 beidseitig zwischen zwei Reibkörpern 760, 762 eingespannt, auf die jeweils entgegengesetzt gerichtete Normalkräfte F_{Normal} einwirken, so dass zwischen dem mittleren Reibkörper 758 und den beiden äußeren Reibkörpern 760, 762 ein starker Reibschluss entsteht. Der Reibschluss wird noch dadurch verstärkt, dass miteinander jeweils in Kontakt tretende Reibflächen 764, 766 der Reibkörper 758 und 760 sowie die korrespondierenden Reibflächen 768, 770 der Reibkörper 758, 762 eine möglichst hohe Rauigkeit aufweisen, wodurch ein ausgezeichnetes spezifisches Energieabsorptionsvermögen des Zugenergieabsorbers 750 erreichbar ist.

In einem Crashfall wirken die Kräfte F_{Zug} sowie zweimal F_{Zug}/2 jeweils in entgegengesetzter Richtung entlang einer Längsachse 772 des Zugenergieabsorbers 752 auf diesen ein, wodurch die anfallende Bewegungsenergie der Reibkörper 758, 760, 762 in sehr wirkungsvoller Weise absorbiert werden kann. Anstelle von quaderförmigen Reibkörpern können z. B. auch koaxiale Hohlzylinderanordnungen oder beliebige andere Geometrien zur Anwendung kommen.

Die Erfindung betrifft zunächst einen Zugenergieabsorber für eine Leichtbaustruktur, insbesondere für Luft-, Raum-, Wasser- sowie Landfahrzeuge. Erfindungsgemäß weist der Zugenergieabsorber zur Absorption von kinetischer Energie einen Mittelabschnitt mit zwei sich jeweils endseitig daran anschließenden Anbindungsbereichen zur mechanischen Anbindung an die Leichtbaustruktur auf, wobei zumindest eine Längsachse des Zugenergieabsorbers parallel zu zwei entgegengesetzt orientierten Zugkräften F_{Zug} verläuft, die beidseitig an den Anbindungsbereichen angreifen. Hierdurch erreicht der Zugenergieabsorber ein hohes spezifisches Energieabsorptionsvermögen und lässt sich in der Regel ohne das Erfordernis größerer konstruktiver Änderungen sowie weitgehend gewichtsneutral in bereits existierende Layouts von Leichtbaustrukturen integrieren. Ferner hat die Erfindung eine weitgehend crashsichere Leichtbaustruktur, insbesondere für Luft-, Raum-, Wasser- sowie Landfahrzeuge zum Gegenstand.

**Bezugszeichenliste**

| | | | |
|---|---|---|---|
| 10. | Leichtbaustruktur | 100. | Zugenergieabsorber |
| 12. | Rumpfzellenstruktur | 102. | Mittelabschnitt |
| 14. | Rumpfzellenhaut | 104. | Anbindungsbereich |
| 16. | Fußbodengerüst | 106. | Anbindungsbereich |
| 18. | Passagierfußboden | 108. | Durchmesser |
| 20. | Vertikalstrebe (Fußboden) | 110. | Durchmesser |
| 22. | Vertikalstrebe (Fußboden) | 112. | Längsachse |
| 24. | Gelenkpunkt | | |
| 26. | Gelenkpunkt | | |
| 28. | Frachtraumboden | 150. | Zugenergieabsorber |
| 30. | Gelenkpunkt | 152. | Mittelabschnitt |
| 32. | Zugenergieabsorber | 153. | gewelltes Flachmaterial |
| 34. | Vertikal strebe | 154. | Anbindungsbereich |
| 36. | Vertikal strebe | 156. | Anbindungsbereich |
| 38. | Längsachse | 158. | Befestigungsauge |
| 40. | Untergrund (Landebahn) | 162. | Längsachse |
| | | 164. | Basislinie |
| | | 166. | Scheitel linie |
| | | | |
| | | l₀ | Ausgangslänge (Absorber) |
| 50. | Zugenergieabsorber | s | Absorptionsweg (Dehnung) |
| 52. | Mittelabschnitt | | |
| 54. | Anbindungsbereich | | |
| 56. | Anbindungsbereich | | |
| 58. | Befestigungsauge | 200. | Zugenergieabsorber |
| 60. | Befestigungsauge | 202. | Mittelabschnitt |
| 62. | Breite (Mittelabschnitt) | 204. | Anbindungsbereich |
| 64. | Breite | 206. | Anbindungsbereich |
| 66. | Längsachse | 208. | Längsachse |
| | | 210. | gewelltes Rohr |
| | | 212. | Rohr |
| | | 214. | Rohr |
| | | | |
| | | | |
| 250. | Zugenergieabsorber | 400. | Zugenergieabsorber |
| 252. | Mittelabschnitt | 402. | Mittelabschnitt |
| 254. | Anbindungsbereich | 404. | Anbindungsbereich |
| 256. | Anbindungsbereich | 406. | Anbindungsbereich |
| 258. | Befestigungsauge | 408. | Befestigungsauge |
| 260. | Befestigungsauge | 410. | Befestigungsauge |
| 262. | Längsachse | 412. | Gurt (biegeweich) |
| 264. | Verstärkungs faser | 414. | Längsachse |
| 266. | Verstärkungs faser | 416. | Lage |
| 268. | Kreuzungspunkt (V-Fasern) | 418. | Lage |
| 270. | Breite (Zugenergieabsorber) | 420. | Schlaufe (Gurt) |
| | | 422. | Vernähung |
| | | | |
| 300. | Zugenergieabsorber | | |
| 302. | Mittelabschnitt | | |
| 304. | Anbindungsbereich | | |
| 306. | Anbindungsbereich | | |
| 308. | Längsachse | 450. | Zugenergieabsorber |
| | | 452. | Mittelabschnitt |
| | | 454. | Anbindungsbereich |
| 350. | Zugenergieabsorber | 456. | Anbindungsbereich |
| 352. | Mittelabschnitt | 458. | Reibkörper (Zylinder) |
| 354. | Anbindungsbereich | 460. | Oberfläche (Reibkörper) |
| 356. | Anbindungsbereich | 462. | Seil (biegeweich) |
| 358. | Beschlag | 464. | Windung |
| 360. | Beschlag | 466. | Längsachse |
| 362. | Befestigungsauge | 468. | Längsmittelachse |
| 364. | Befestigungsauge | 470. | Ende (Seil) |
| 366. | Ausnehmung | 472. | Ende (Seil) |
| 368. | Ausnehmung | 474. | Absorber |
| 370. | strangförmige Elemente | 476. | Widerlager |
| 372. | Längsachse | 478. | Endabschnitt (Absorber) |
| | | | |
| | | | |
| | | | |
| | | | |
| 500. | Zugenergieabsorber | 550. | Zugenergieabsorber |
| 502. | Mittelabschnitt | 552. | Mittelabschnitt |
| 504. | Anbindungsbereich | 554. | Anbindungsbereich |
| 506. | Anbindungsbereich | 556. | Anbindungsbereich |
| 508. | Kernverbundplatte | 558. | Zone |
| 510. | Kernstruktur | 560. | Bandschlaufe |
| 512. | Decklage | 562. | Ende |
| 514. | Decklage | 564. | Ende |
| 516. | Zone | 568. | Höhe (Bandschlaufe) |
| 518. | Band | 570. | Räumabschnitt |
| 520. | Oberseite (Band) | 572. | Längsachse |
| 522. | Unterseite (Band) | | |
| 524. | Höhe (Band) | | |
| 526. | Höhe (Kernstruktur) | | |
| 532. | Längsachse | | |
| 534. | Längsabschnitt | | |
| 536. | Längsabschnitt | | |
| 538. | schwarzer Pfeil | 600. | Zugenergieabsorber |
| | | 602. | Mittelabschnitt |
| | | 604. | Anbindungsbereich |
| | | 606. | Anbindungsbereich |
| | | 608. | Bohrung (senkrecht) |
| | | 610. | Bolzen |
| | | 612. | Gabel |
| | | 614. | Außenkante |
| | | 616. | Gabelschenkel |
| | | 618. | Gabelschenkel |
| | | 620. | Längsachse |
| | | 622. | Quersteg (Gabel) |
| | | 624. | Zone |
| | | | |
| | | | |
| | | | |
| 650. | Zugenergieabsorber | 730. | Windung |
| 652. | Mittelabschnitt | 732. | Windung |
| 654. | Anbindungsbereich | 734. | Windung |
| 656. | Anbindungsbereich | | |
| 658. | Befestigungsmittel | | |
| 659. | Befestigungsmittel | | |
| 660. | Bohrung | 750. | Zugenergieabsorber |
| 661. | Bohrung | 752. | Mittelabschnitt |
| 662. | Lasche | 754. | Anbindungsbereich |
| 664. | Lasche | 756. | Anbindungsbereich |
| 666. | Längsachse | 758. | Reibkörper |
| 668. | Ende (Lasche) | 760. | Reibkörper |
| 670. | Ende (Lasche) | 762. | Reibkörper |
| 672. | Zone | 764. | Reibfläche |
| | | 766. | Reibfläche |
| | | 768. | Reibfläche |
| | | 770. | Reibfläche |
| | | 772. | Längsachse |
| | | | |
| 700. | Zugenergieabsorber | | |
| 702. | Mittelabschnitt | | |
| 704. | Anbindungsbereich | | |
| 706. | Anbindungsbereich | | |
| 708. | Reibkörper (Zylinder) | | |
| 710. | Reibkörper (Zylinder) | | |
| 712. | Längsmittelachse (Zylinder) | | |
| 714. | Längsmittelachse (Zylinder) | | |
| 716. | Zwischenraum | | |
| 718. | Seil | | |
| 720. | Ende (Seil) | | |
| 722. | Ende (Seil) | | |
| 724. | Längsachse | | |
| 726. | Führung (Reibkörper) | | |
| 728. | Führung (Reibkörper) | | |

## Patentansprüche

1. Zugenergieabsorber (32, 50, 100, 150, 200, 250, 300, 350, 400, 450, 500, 550, 600, 650, 700, 750) für eine Leichtbaustruktur (10), insbesondere für Luft-, Raum-, Wasser- sowie Landfahrzeuge, **dadurch gekennzeichnet, dass** der Zugenergieabsorber (32, 50, 100, 150, 200, 250, 300, 350, 400, 450, 500, 550, 600, 650, 700, 750) zur Absorption von kinetischer Energie einen Mittelabschnitt (52, 102, 152, 202, 252, 302, 352, 402, 452, 500, 552, 602, 652, 702, 752) mit zwei sich jeweils endseitig daran anschließenden Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) zur mechanischen Anbindung an die Leichtbaustruktur (10) aufweist, wobei zumindest eine Längsachse (38, 66, 112, 162, 208, 262, 308, 372, 414, 466, 532, 572, 620, 666, 724, 772) des Zugenergieabsorbers (32, 50, 100, 150, 200, 250, 300, 350, 400, 450, 500, 550, 600) parallel zu zwei entgegengesetzt orientierten Zugkräften F_{Zug} verläuft, die beidseitig an den Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) angreifen, **dadurch gekennzeichnet, dass** der Mittelabschnitt (452) einen Reibkörper (458), insbesondere einen Zylinder oder einen Kegel, als integrierten Kraftverstärker aufweist, der quer zur Zugkraft F_{Zug} sowie einer dieser entgegengesetzt orientierten Haltekraft F_{Halte} angeordnet ist und eine Oberfläche (460) des Reibkörpers (458) mindestens mit einer Windung (464) eines zumindest abschnittsweise biegeweichen und zugsteifen Seils (462) belegt ist, wobei die Haltekraft F_{Halte} von einem Absorber (474) bereitgestellt wird.

2. Zugenergieabsorber nach Patentanspruch 1, **dadurch gekennzeichnet, dass** der Mittelabschnitt (702) mindestens zwei Reibkörper (708, 710), insbesondere mindestens zwei Zylinder und/oder mindestens zwei Kegel, als integrierte Kraftverstärker aufweist, wobei Längsmittelachsen (712, 714) der Reibkörper (708, 710) unter Schaffung eines Zwischenraums (716) zur Durchführung eines Seils (718) parallel zu einander verschiebbar sind und jeder Reibkörper (508, 510) mit mindestens einer Windung (730-734) eines Seils (518) belegt ist.

3. Zugenergieabsorber (32, 50, 100, 150, 200, 250, 300, 350, 400, 450, 500, 550, 600, 650, 700, 750) für eine Leichtbaustruktur (10), insbesondere für Luft-, Raum-, Wasser- sowie Landfahrzeuge, **dadurch gekennzeichnet, dass** der Zugenergieabsorber (32, 50, 100, 150, 200, 250, 300, 350, 400, 450, 500, 550, 600, 650, 700, 750) zur Absorption von kinetischer Energie einen Mittelabschnitt (52, 102, 152, 202, 252, 302, 352, 402, 452, 500, 552, 602, 652, 702, 752) mit zwei sich jeweils endseitig daran anschließenden Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) zur mechanischen Anbindung an die Leichtbaustruktur (10) aufweist, wobei zumindest eine Längsachse (38, 66, 112, 162, 208, 262, 308, 372, 414, 466, 532, 572, 620, 666, 724, 772) des Zugenergieabsorbers (32, 50, 100, 150, 200, 250, 300, 350, 400, 450, 500, 550, 600) parallel zu zwei entgegengesetzt orientierten Zugkräften F_{Zug} verläuft, die beidseitig an den Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) angreifen,
**dadurch gekennzeichnet, dass** der Mittelabschnitt (502, 552, 602, 652) des Zugenergieabsorbers (500, 550, 600, 650) mit einer Kernverbundplatte (508) gebildet ist, die eine Kernstruktur (510) mit beidseitig aufgebrachten Decklagen (512, 514) aufweist, wobei die Absorption der kinetischen Energie in einer Zone (516, 558, 624, 672) der Kernverbundplatte (508) erfolgt,
wobei die Zone (516) der Kernstruktur (510) von einem biegeweichen und zugsteifen Band (518) umschlossen ist, dessen Oberseite (520) und Unterseite (522) jeweils senkrecht zu den Decklagen (512, 514) verläuft, wobei mittels der am Band (518) angreifenden Zugkräfte F_{Zug} die Kernstruktur (510) innerhalb der Zone (516) zur Energieabsorption ausräumbar ist.

4. Zugenergieabsorber (32, 50, 100, 150, 200, 250, 300, 350, 400, 450, 500, 550, 600, 650, 700, 750) für eine Leichtbaustruktur (10), insbesondere für Luft-, Raum-, Wasser- sowie Landfahrzeuge, **dadurch gekennzeichnet, dass** der Zugenergieabsorber (32, 50, 100, 150, 200, 250, 300, 350, 400, 450, 500, 550, 600, 650, 700, 750) zur Absorption von kinetischer Energie einen Mittelabschnitt (52, 102, 152, 202, 252, 302, 352, 402, 452, 500, 552, 602, 652, 702, 752) mit zwei sich jeweils endseitig daran anschließenden Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) zur mechanischen Anbindung an die Leichtbaustruktur (10) aufweist, wobei zumindest eine Längsachse (38, 66, 112, 162, 208, 262, 308, 372, 414, 466, 532, 572, 620, 666, 724, 772) des Zugenergieabsorbers (32, 50, 100, 150, 200, 250, 300, 350, 400, 450, 500, 550, 600) parallel zu zwei entgegengesetzt orientierten Zugkräften F_{Zug} verläuft, die beidseitig an den Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) angreifen,
**dadurch gekennzeichnet, dass** der Mittelabschnitt (502, 552, 602, 652) des Zugenergieabsorbers (500, 550, 600, 650) mit einer Kernverbundplatte (508) gebildet ist, die eine Kernstruktur (510) mit beidseitig aufgebrachten Decklagen (512, 514) aufweist, wobei die Absorption der kinetischen Energie in einer Zone (516, 558, 624, 672) der Kernverbundplatte (508) erfolgt,
wobei die Zone (558) der Kernstruktur (510) teilweise von einer biegeweichen und zugsteifen Bandschlaufe (560) umschlossen ist, wobei mittels der an Enden (562, 564) der Bandschlaufe (560) sowie an der Kernverbundplatte (508) angreifenden Zugkräfte F_{Zug} die Kernstruktur (510) innerhalb der Zone (558) zur Energieabsorption ausräumbar ist.

5. Zugenergieabsorber (32, 50, 100, 150, 200, 250, 300, 350, 400, 450, 500, 550, 600, 650, 700, 750) für eine Leichtbaustruktur (10), insbesondere für Luft-, Raum-, Wasser- sowie Landfahrzeuge, **dadurch gekennzeichnet, dass** der Zugenergieabsorber (32, 50, 100, 150, 200, 250, 300, 350, 400, 450, 500, 550, 600, 650, 700, 750) zur Absorption von kinetischer Energie einen Mittelabschnitt (52, 102, 152, 202, 252, 302, 352, 402, 452, 500, 552, 602, 652, 702, 752) mit zwei sich jeweils endseitig daran anschließenden Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) zur mechanischen Anbindung an die Leichtbaustruktur (10) aufweist, wobei zumindest eine Längsachse (38, 66, 112, 162, 208, 262, 308, 372, 414, 466, 532, 572, 620, 666, 724, 772) des Zugenergieabsorbers (32, 50, 100, 150, 200, 250, 300, 350, 400, 450, 500, 550, 600) parallel zu zwei entgegengesetzt orientierten Zugkräften F_{Zug} verläuft, die beidseitig an den Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) angreifen,
**dadurch gekennzeichnet, dass** der Mittelabschnitt (502, 552, 602, 652) des Zugenergieabsorbers (500, 550, 600, 650) mit einer Kernverbundplatte (508) gebildet ist, die eine Kernstruktur (510) mit beidseitig aufgebrachten Decklagen (512, 514) aufweist, wobei die Absorption der kinetischen Energie in einer Zone (516, 558, 624, 672) der Kernverbundplatte (508) erfolgt,
wobei in die Kernverbundplatte (508) mindestens eine senkrechte Bohrung (608) zur Durchführung jeweils mindestens eines Bolzens (610) eingebracht ist, wobei der mindestens eine Bolzen (610) in einer Halterung, insbesondere in einer eine Außenkante (614) umgreifenden Gabel (612), aufgenommen ist, wobei die Energieabsorption im Wesentlichen durch Lochleibungsversagen der Bohrung (608) in den Decklagen (512, 514) innerhalb der Zone (624) der Kernverbundplatte (508) infolge der an der Halterung und im Anbindungsbereich (604) angreifenden Zugkräfte F_{Zug} erfolgt.

6. Zugenergieabsorber (32, 50, 100, 150, 200, 250, 300, 350, 400, 450, 500, 550, 600, 650, 700, 750) für eine Leichtbaustruktur (10), insbesondere für Luft-, Raum-, Wasser- sowie Landfahrzeuge, **dadurch gekennzeichnet, dass** der Zugenergieabsorber (32, 50, 100, 150, 200, 250, 300, 350, 400, 450, 500, 550, 600, 650, 700, 750) zur Absorption von kinetischer Energie einen Mittelabschnitt (52, 102, 152, 202, 252, 302, 352, 402, 452, 500, 552, 602, 652, 702, 752) mit zwei sich jeweils endseitig daran anschließenden Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) zur mechanischen Anbindung an die Leichtbaustruktur (10) aufweist, wobei zumindest eine Längsachse (38, 66, 112, 162, 208, 262, 308, 372, 414, 466, 532, 572, 620, 666, 724, 772) des Zugenergieabsorbers (32, 50, 100, 150, 200, 250, 300, 350, 400, 450, 500, 550, 600) parallel zu zwei entgegengesetzt orientierten Zugkräften F_{Zug} verläuft, die beidseitig an den Anbindungsbereichen (54, 56, 154, 156, 204, 206, 254, 256, 304, 306, 354, 356, 404, 406, 454, 456, 504, 506, 554, 556, 604, 606, 654, 656, 704, 706, 754, 756) angreifen,
**dadurch gekennzeichnet, dass** der Mittelabschnitt (502, 552, 602, 652) des Zugenergieabsorbers (500, 550, 600, 650) mit einer Kernverbundplatte (508) gebildet ist, die eine Kernstruktur (510) mit beidseitig aufgebrachten Decklagen (512, 514) aufweist, wobei die Absorption der kinetischen Energie in einer Zone (516, 558, 624, 672) der Kernverbundplatte (508) erfolgt,
wobei in der Kernverbundplatte (508) mindestens zwei Befestigungsmittel (658, 659) in Bohrungen (660, 661) angeordnet sind, wobei die Befestigungsmittel (658, 659) jeweils mit einer Lasche (662, 664) verbunden sind und die Energieabsorption im Wesentlichen durch Lochleibungsversagen der Bohrungen (660, 661) in den Decklagen (512, 514) innerhalb der Zone (672) der Kernverbundplatte (508) infolge der an den Laschen (662, 664) angreifenden Zugkräfte F_{Zug} erfolgt.

7. Leichtbaustruktur (10) für Luft-, Raum-, Wasser- sowie Landfahrzeuge, **dadurch gekennzeichnet, dass** in die Leichtbaustruktur (10) mindestens ein Zugenergieabsorber (32, 50, 100, 150, 200, 250, 300, 350, 400, 450, 500, 550, 600, 650, 700, 750) gemäß einem der vorhergehenden Ansprüche zur Absorption von kinetischer Energie in einem Crashfall integriert ist.

## Claims

1. Tensile energy absorber (32, 50, 100, 150, 200, 250, 300, 350, 400, 450, 500, 550, 600, 650, 700, 750) for a lightweight structure (10), in particular for aircraft, spacecraft, watercraft and land vehicles, **characterized in that** the tensile energy absorber (32, 50, 100, 150, 200, 250, 300, 350, 400, 450, 500, 550, 600, 650, 700, 750) has, for the absorption of kinetic energy, a central portion (52, 102, 152, 202, 252, 302, 352, 402, 452, 500, 552, 602, 652, 702, 752) with two attachment regions (54, 56, 154, 156, 204, 206, 254, 256, 304, 306, 354, 356, 404, 406, 454, 456, 504, 506, 554, 556, 604, 606, 654, 656, 704, 706, 754, 756) each adjoining said central portion on the end sides and intended for mechanical attachment to the lightweight structure (10), wherein at least one longitudinal axis (38, 66, 112, 162, 208, 262, 308, 372, 414, 466, 532, 572, 620, 666, 724, 772) of the tensile energy absorber (32, 50, 100, 150, 200, 250, 300, 350, 400, 450, 500, 550, 600) extends parallel to two oppositely oriented tensile forces Fₜₑₙₛᵢₗₑ which act on both sides of the attachment regions (54, 56, 154, 156, 204, 206, 254, 256, 304, 306, 354, 356, 404, 406, 454, 456, 504, 506, 554, 556, 604, 606, 654, 656, 704, 706, 754, 756), **characterized in that**
the central portion (452) has a friction body (458), in particular a cylinder or a cone, as integrated force amplifier which is arranged transversely to the tensile force Fₜₑₙₛᵢₗₑ and to a holding force F_{holding} oriented oppositely thereto, and a surface (460) of the friction body (458) is covered at least with one winding (464) of a cable (462) which is flexible and tension-resistant at least in certain portions, wherein the holding force F_{holding} is provided by an absorber (474) .

2. Tensile energy absorber according to Patent Claim 1, **characterized in that** the central portion (702) has at least two friction bodies (708, 710), in particular at least two cylinders and/or at least two cones, as integrated force amplifiers, wherein longitudinal centre axes (712, 714) of the friction bodies (708, 710) are displaceable parallel to one another, with the creation of an interspace (716) for guiding through a cable (718), and each friction body (508, 510) is covered with at least one winding (730-734) of a cable (518).

3. Tensile energy absorber (32, 50, 100, 150, 200, 250, 300, 350, 400, 450, 500, 550, 600, 650, 700, 750) for a lightweight structure (10), in particular for aircraft, spacecraft, watercraft and land vehicles, **characterized in that** the tensile energy absorber (32, 50, 100, 150, 200, 250, 300, 350, 400, 450, 500, 550, 600, 650, 700, 750) has, for the absorption of kinetic energy, a central portion (52, 102, 152, 202, 252, 302, 352, 402, 452, 500, 552, 602, 652, 702, 752) with two attachment regions (54, 56, 154, 156, 204, 206, 254, 256, 304, 306, 354, 356, 404, 406, 454, 456, 504, 506, 554, 556, 604, 606, 654, 656, 704, 706, 754, 756) each adjoining said central portion on the end sides and intended for mechanical attachment to the lightweight structure (10), wherein at least one longitudinal axis (38, 66, 112, 162, 208, 262, 308, 372, 414, 466, 532, 572, 620, 666, 724, 772) of the tensile energy absorber (32, 50, 100, 150, 200, 250, 300, 350, 400, 450, 500, 550, 600) extends parallel to two oppositely oriented tensile forces Fₜₑₙₛᵢₗₑ which act on both sides of the attachment regions (54, 56, 154, 156, 204, 206, 254, 256, 304, 306, 354, 356, 404, 406, 454, 456, 504, 506, 554, 556, 604, 606, 654, 656, 704, 706, 754, 756), **characterized in that**
the central portion (502, 552, 602, 652) of the tensile energy absorber (500, 550, 600, 650) is formed with a core composite panel (508) which has a core structure (510) with cover layers (512, 514) applied on both sides, wherein the absorption of the kinetic energy occurs in a zone (516, 558, 624, 672) of the core composite panel (508),
wherein the zone (516) of the core structure (510) is enclosed by a flexible and tension-resistant strap (518) whose upper side (520) and lower side (522) each extend perpendicularly to the cover layers (512, 514), wherein the core structure (510) can be cleared out within the zone (516) for energy absorption by means of the tensile forces Fₜₑₙₛᵢₗₑ acting on the strap (518) .

4. Tensile energy absorber (32, 50, 100, 150, 200, 250, 300, 350, 400, 450, 500, 550, 600, 650, 700, 750) for a lightweight structure (10), in particular for aircraft, spacecraft, watercraft and land vehicles, **characterized in that** the tensile energy absorber (32, 50, 100, 150, 200, 250, 300, 350, 400, 450, 500, 550, 600, 650, 700, 750) has, for the absorption of kinetic energy, a central portion (52, 102, 152, 202, 252, 302, 352, 402, 452, 500, 552, 602, 652, 702, 752) with two attachment regions (54, 56, 154, 156, 204, 206, 254, 256, 304, 306, 354, 356, 404, 406, 454, 456, 504, 506, 554, 556, 604, 606, 654, 656, 704, 706, 754, 756) each adjoining said central portion on the end sides and intended for mechanical attachment to the lightweight structure (10), wherein at least one longitudinal axis (38, 66, 112, 162, 208, 262, 308, 372, 414, 466, 532, 572, 620, 666, 724, 772) of the tensile energy absorber (32, 50, 100, 150, 200, 250, 300, 350, 400, 450, 500, 550, 600) extends parallel to two oppositely oriented tensile forces Fₜₑₙₛᵢₗₑ which act on both sides of the attachment regions (54, 56, 154, 156, 204, 206, 254, 256, 304, 306, 354, 356, 404, 406, 454, 456, 504, 506, 554, 556, 604, 606, 654, 656, 704, 706, 754, 756), **characterized in that**
the central portion (502, 552, 602, 652) of the tensile energy absorber (500, 550, 600, 650) is formed with a core composite panel (508) which has a core structure (510) with cover layers (512, 514) applied on both sides, wherein the absorption of the kinetic energy occurs in a zone (516, 558, 624, 672) of the core composite panel (508),
wherein the zone (558) of the core structure (510) is partially enclosed by a flexible and tension-resistant strap loop (560), wherein the core structure (510) can be cleared out within the zone (558) for energy absorption by means of the tensile forces Fₜₑₙₛᵢₗₑ which act on ends (562, 564) of the strap loop (560) and on the core composite panel (508).

5. Tensile energy absorber (32, 50, 100, 150, 200, 250, 300, 350, 400, 450, 500, 550, 600, 650, 700, 750) for a lightweight structure (10), in particular for aircraft, spacecraft, watercraft and land vehicles, **characterized in that** the tensile energy absorber (32, 50, 100, 150, 200, 250, 300, 350, 400, 450, 500, 550, 600, 650, 700, 750) has, for the absorption of kinetic energy, a central portion (52, 102, 152, 202, 252, 302, 352, 402, 452, 500, 552, 602, 652, 702, 752) with two attachment regions (54, 56, 154, 156, 204, 206, 254, 256, 304, 306, 354, 356, 404, 406, 454, 456, 504, 506, 554, 556, 604, 606, 654, 656, 704, 706, 754, 756) each adjoining said central portion on the end sides and intended for mechanical attachment to the lightweight structure (10), wherein at least one longitudinal axis (38, 66, 112, 162, 208, 262, 308, 372, 414, 466, 532, 572, 620, 666, 724, 772) of the tensile energy absorber (32, 50, 100, 150, 200, 250, 300, 350, 400, 450, 500, 550, 600) extends parallel to two oppositely oriented tensile forces Fₜₑₙₛᵢₗₑ which act on both sides of the attachment regions (54, 56, 154, 156, 204, 206, 254, 256, 304, 306, 354, 356, 404, 406, 454, 456, 504, 506, 554, 556, 604, 606, 654, 656, 704, 706, 754, 756), **characterized in that**
the central portion (502, 552, 602, 652) of the tensile energy absorber (500, 550, 600, 650) is formed with a core composite panel (508) which has a core structure (510) with cover layers (512, 514) applied on both sides, wherein the absorption of the kinetic energy occurs in a zone (516, 558, 624, 672) of the core composite panel (508),
wherein at least one vertical bore (608) for guiding through at least one respective bolt (610) is incorporated in the core composite panel (508), wherein the at least one bolt (610) is received in a holder, in particular in a fork (612) engaging around an outer edge (614), wherein the energy absorption occurs substantially by bearing stress failure of the bore (608) in the cover layers (512, 514) within the zone (624) of the core composite panel (508) as a result of the tensile forces Fₜₑₙₛᵢₗₑ which act on the holder and in the attachment region (604).

6. Tensile energy absorber (32, 50, 100, 150, 200, 250, 300, 350, 400, 450, 500, 550, 600, 650, 700, 750) for a lightweight structure (10), in particular for aircraft, spacecraft, watercraft and land vehicles, **characterized in that** the tensile energy absorber (32, 50, 100, 150, 200, 250, 300, 350, 400, 450, 500, 550, 600, 650, 700, 750) has, for the absorption of kinetic energy, a central portion (52, 102, 152, 202, 252, 302, 352, 402, 452, 500, 552, 602, 652, 702, 752) with two attachment regions (54, 56, 154, 156, 204, 206, 254, 256, 304, 306, 354, 356, 404, 406, 454, 456, 504, 506, 554, 556, 604, 606, 654, 656, 704, 706, 754, 756) each adjoining said central portion on the end sides and intended for mechanical attachment to the lightweight structure (10), wherein at least one longitudinal axis (38, 66, 112, 162, 208, 262, 308, 372, 414, 466, 532, 572, 620, 666, 724, 772) of the tensile energy absorber (32, 50, 100, 150, 200, 250, 300, 350, 400, 450, 500, 550, 600) extends parallel to two oppositely oriented tensile forces Fₜₑₙₛᵢₗₑ which act on both sides of the attachment regions (54, 56, 154, 156, 204, 206, 254, 256, 304, 306, 354, 356, 404, 406, 454, 456, 504, 506, 554, 556, 604, 606, 654, 656, 704, 706, 754, 756), **characterized in that**
the central portion (502, 552, 602, 652) of the tensile energy absorber (500, 550, 600, 650) is formed with a core composite panel (508) which has a core structure (510) with cover layers (512, 514) applied on both sides, wherein the absorption of the kinetic energy occurs in a zone (516, 558, 624, 672) of the core composite panel (508),
wherein at least two fastening means (658, 659) are arranged in bores (660, 661) in the core composite panel (508), wherein the fastening means (658, 659) are each connected to a tab (662, 664), and the energy absorption occurs substantially by bearing stress failure of the bores (660, 661) in the cover layers (512, 514) within the zone (672) of the core composite panel (508) as a result of the tensile forces Fₜₑₙₛᵢₗₑ which act on the tabs (662, 664).

7. Lightweight structure (10) for aircraft, spacecraft, watercraft and land vehicles, **characterized in that** at least one tensile energy absorber (32, 50, 100, 150, 200, 250, 300, 350, 400, 450, 500, 550, 600, 650, 700, 750) according to one of the preceding claims for the absorption of kinetic energy in a crash situation is integrated into the lightweight structure (10).

## Revendications

1. Absorbeur d'énergie de traction (32, 50, 100, 150, 200, 250, 300, 350, 400, 450, 500, 550, 600, 650, 700, 750) pour une structure de construction légère (10), en particulier pour des aéronefs, des vaisseaux spatiaux, des navires et des véhicules terrestres, **caractérisé en ce que** l'absorbeur d'énergie de traction (32, 50, 100, 150, 200, 250, 300, 350, 400, 450, 500, 550, 600, 650, 700, 750) présente, pour l'absorption d'énergie cinétique, une partie centrale (52, 102, 152, 202, 252, 302, 352, 402, 452, 500, 552, 602, 652, 702, 752) avec deux régions de liaison (54, 56, 154, 156, 204, 206, 254, 256, 304, 306, 354, 356, 404, 406, 454, 456, 504, 506, 554, 556, 604, 606, 654, 656, 704, 706, 754, 756) se raccordant à celle-ci à chaque fois du côté de l'extrémité, pour la liaison mécanique à la structure de construction légère (10), au moins un axe longitudinal (38, 66, 112, 162, 208, 262, 308, 372, 414, 466, 532, 572, 620, 666, 724, 772) de l'absorbeur d'énergie de traction (32, 50, 100, 150, 200, 250, 300, 350, 400, 450, 500, 550, 600) s'étendant parallèlement à deux forces de traction F_{Zug} orientées en sens inverse, lesquelles agissent des deux côtés sur les régions de liaison (54, 56, 154, 156, 204, 206, 254, 256, 304, 306, 354, 356, 404, 406, 454, 456, 504, 506, 554, 556, 604, 606, 654, 656, 704, 706, 754, 756),
**caractérisé en ce que**
la partie centrale (452) présente un corps de friction (458), en particulier un cylindre ou un cône, en tant qu'amplificateur de force intégré, lequel est disposé transversalement à la force de traction F_{Zug} ainsi qu'à une force de retenue F_{Halte} orientée à l'opposé de celle-ci et une surface (460) du corps de friction (458) est munie d'au moins un enroulement (464) d'un câble (462) au moins en partie déformable en torsion et rigide en traction, la force de retenue F_{Halte} étant fournie par un absorbeur (474).

2. Absorbeur d'énergie de traction selon la revendication 1, **caractérisé en ce que** la partie centrale (702) présente au moins deux corps de friction (708, 710), en particulier au moins deux cylindres et/ou au moins deux cônes, en tant qu'amplificateurs de force intégrés, des axes médians longitudinaux (712, 714) des corps de friction (708, 710) pouvant être déplacés parallèlement l'un à l'autre en créant un espace intermédiaire (716) pour le passage d'un câble (718) et chaque corps de friction (508, 510) étant muni d'au moins un enroulement (730-734) d'un câble (518).

3. Absorbeur d'énergie de traction (32, 50, 100, 150, 200, 250, 300, 350, 400, 450, 500, 550, 600, 650, 700, 750) pour une structure de construction légère (10), en particulier pour des aéronefs, des vaisseaux spatiaux, des navires et des véhicules terrestres, **caractérisé en ce que** l'absorbeur d'énergie de traction (32, 50, 100, 150, 200, 250, 300, 350, 400, 450, 500, 550, 600, 650, 700, 750) présente, pour l'absorption d'énergie cinétique, une partie centrale (52, 102, 152, 202, 252, 302, 352, 402, 452, 500, 552, 602, 652, 702, 752) avec deux régions de liaison (54, 56, 154, 156, 204, 206, 254, 256, 304, 306, 354, 356, 404, 406, 454, 456, 504, 506, 554, 556, 604, 606, 654, 656, 704, 706, 754, 756) se raccordant à celle-ci à chaque fois du côté de l'extrémité, pour la liaison mécanique à la structure de construction légère (10), au moins un axe longitudinal (38, 66, 112, 162, 208, 262, 308, 372, 414, 466, 532, 572, 620, 666, 724, 772) de l'absorbeur d'énergie de traction (32, 50, 100, 150, 200, 250, 300, 350, 400, 450, 500, 550, 600) s'étendant parallèlement à deux forces de traction F_{Zug} orientées en sens inverse, lesquelles agissent des deux côtés sur les régions de liaison (54, 56, 154, 156, 204, 206, 254, 256, 304, 306, 354, 356, 404, 406, 454, 456, 504, 506, 554, 556, 604, 606, 654, 656, 704, 706, 754, 756),
**caractérisé en ce que**
la partie centrale (502, 552, 602, 652) de l'absorbeur d'énergie de traction (500, 550, 600, 650) est formée avec une plaque de coeur composite (508) qui présente une structure de coeur (510) avec des couches de recouvrement (512, 514) appliquées des deux côtés de celle-ci, l'absorption de l'énergie cinétique s'effectuant dans une zone (516, 558, 624, 672) de la plaque de coeur composite (508),
la zone (516) de la structure de coeur (510) étant entourée par une bande (518) déformable en torsion et rigide en traction, dont le côté supérieur (520) et le côté inférieur (522) s'étendent chacun perpendiculairement aux couches de recouvrement (512, 514), la structure de coeur (510) à l'intérieur de la zone (516) pour l'absorption d'énergie pouvant être déchargée au moyen des forces de traction F_{Zug} agissant sur la bande (518).

4. Absorbeur d'énergie de traction (32, 50, 100, 150, 200, 250, 300, 350, 400, 450, 500, 550, 600, 650, 700, 750) pour une structure de construction légère (10), en particulier pour des aéronefs, des vaisseaux spatiaux, des navires et des véhicules terrestres, **caractérisé en ce que** l'absorbeur d'énergie de traction (32, 50, 100, 150, 200, 250, 300, 350, 400, 450, 500, 550, 600, 650, 700, 750) présente, pour l'absorption d'énergie cinétique, une partie centrale (52, 102, 152, 202, 252, 302, 352, 402, 452, 500, 552, 602, 652, 702, 752) avec deux régions de liaison (54, 56, 154, 156, 204, 206, 254, 256, 304, 306, 354, 356, 404, 406, 454, 456, 504, 506, 554, 556, 604, 606, 654, 656, 704, 706, 754, 756) se raccordant à celle-ci à chaque fois du côté de l'extrémité, pour la liaison mécanique à la structure de construction légère (10), au moins un axe longitudinal (38, 66, 112, 162, 208, 262, 308, 372, 414, 466, 532, 572, 620, 666, 724, 772) de l'absorbeur d'énergie de traction (32, 50, 100, 150, 200, 250, 300, 350, 400, 450, 500, 550, 600) s'étendant parallèlement à deux forces de traction F_{Zug} orientées en sens inverse, lesquelles agissent des deux côtés sur les régions de liaison (54, 56, 154, 156, 204, 206, 254, 256, 304, 306, 354, 356, 404, 406, 454, 456, 504, 506, 554, 556, 604, 606, 654, 656, 704, 706, 754, 756),
**caractérisé en ce que**
la partie centrale (502, 552, 602, 652) de l'absorbeur d'énergie de traction (500, 550, 600, 650) est formée avec une plaque de coeur composite (508) qui présente une structure de coeur (510) avec des couches de recouvrement (512, 514) appliquées des deux côtés de celle-ci, l'absorption de l'énergie cinétique s'effectuant dans une zone (516, 558, 624, 672) de la plaque de coeur composite (508),
la zone (558) de la structure de coeur (510) étant entourée en partie par une bande en boucle (560) déformable en torsion et rigide en traction, la structure de coeur (510) à l'intérieur de la zone (558) pour l'absorption d' énergie pouvant être déchargée au moyen des forces de traction F_{Zug} agissant aux extrémités (562, 564) de la bande en boucle (560) ainsi que sur la plaque de coeur composite (508).

5. Absorbeur d'énergie de traction (32, 50, 100, 150, 200, 250, 300, 350, 400, 450, 500, 550, 600, 650, 700, 750) pour une structure de construction légère (10), en particulier pour des aéronefs, des vaisseaux spatiaux, des navires et des véhicules terrestres, **caractérisé en ce que** l'absorbeur d'énergie de traction (32, 50, 100, 150, 200, 250, 300, 350, 400, 450, 500, 550, 600, 650, 700, 750) présente, pour l'absorption d'énergie cinétique, une partie centrale (52, 102, 152, 202, 252, 302, 352, 402, 452, 500, 552, 602, 652, 702, 752) avec deux régions de liaison (54, 56, 154, 156, 204, 206, 254, 256, 304, 306, 354, 356, 404, 406, 454, 456, 504, 506, 554, 556, 604, 606, 654, 656, 704, 706, 754, 756) se raccordant à celle-ci à chaque fois du côté de l'extrémité, pour la liaison mécanique à la structure de construction légère (10), au moins un axe longitudinal (38, 66, 112, 162, 208, 262, 308, 372, 414, 466, 532, 572, 620, 666, 724, 772) de l'absorbeur d'énergie de traction (32, 50, 100, 150, 200, 250, 300, 350, 400, 450, 500, 550, 600) s'étendant parallèlement à deux forces de traction F_{Zug} orientées en sens inverse, lesquelles agissent des deux côtés sur les régions de liaison (54, 56, 154, 156, 204, 206, 254, 256, 304, 306, 354, 356, 404, 406, 454, 456, 504, 506, 554, 556, 604, 606, 654, 656, 704, 706, 754, 756),
**caractérisé en ce que**
la partie centrale (502, 552, 602, 652) de l'absorbeur d'énergie de traction (500, 550, 600, 650) est formée avec une plaque de coeur composite (508) qui présente une structure de coeur (510) avec des couches de recouvrement (512, 514) appliquées des deux côtés de celle-ci, l'absorption de l'énergie cinétique s'effectuant dans une zone (516, 558, 624, 672) de la plaque de coeur composite (508),
au moins un alésage (608) perpendiculaire pour le passage d'au moins un boulon respectif (610) étant réalisé dans la plaque de coeur composite (508), l'au moins un boulon (610) étant reçu dans une fixation, en particulier dans une fourche (612) venant en prise autour d'une arête extérieure (614), l'absorption d'énergie s'effectuant essentiellement par décalage de l'ébrasement du trou de l'alésage (608) dans les couches de recouvrement (512, 514) à l'intérieur de la zone (624) de la plaque de coeur composite (508) sous l'effet des forces de traction F_{Zug} agissant sur la fixation et dans la région de liaison (604).

6. Absorbeur d'énergie de traction (32, 50, 100, 150, 200, 250, 300, 350, 400, 450, 500, 550, 600, 650, 700, 750) pour une structure de construction légère (10), en particulier pour des aéronefs, des vaisseaux spatiaux, des navires et des véhicules terrestres, **caractérisé en ce que** l'absorbeur d'énergie de traction (32, 50, 100, 150, 200, 250, 300, 350, 400, 450, 500, 550, 600, 650, 700, 750) présente, pour l'absorption d'énergie cinétique, une partie centrale (52, 102, 152, 202, 252, 302, 352, 402, 452, 500, 552, 602, 652, 702, 752) avec deux régions de liaison (54, 56, 154, 156, 204, 206, 254, 256, 304, 306, 354, 356, 404, 406, 454, 456, 504, 506, 554, 556, 604, 606, 654, 656, 704, 706, 754, 756) se raccordant à celle-ci à chaque fois du côté de l'extrémité, pour la liaison mécanique à la structure de construction légère (10), au moins un axe longitudinal (38, 66, 112, 162, 208, 262, 308, 372, 414, 466, 532, 572, 620, 666, 724, 772) de l'absorbeur d'énergie de traction (32, 50, 100, 150, 200, 250, 300, 350, 400, 450, 500, 550, 600) s'étendant parallèlement à deux forces de traction F_{Zug} orientées en sens inverse, lesquelles agissent des deux côtés sur les régions de liaison (54, 56, 154, 156, 204, 206, 254, 256, 304, 306, 354, 356, 404, 406, 454, 456, 504, 506, 554, 556, 604, 606, 654, 656, 704, 706, 754, 756),
**caractérisé en ce que**
la partie centrale (502, 552, 602, 652) de l'absorbeur d'énergie de traction (500, 550, 600, 650) est formée avec une plaque de coeur composite (508) qui présente une structure de coeur (510) avec des couches de recouvrement (512, 514) appliquées des deux côtés de celle-ci, l'absorption de l'énergie cinétique s'effectuant dans une zone (516, 558, 624, 672) de la plaque de coeur composite (508),
au moins deux moyens de fixation (658, 659) étant disposés dans des alésages (660, 661) dans la plaque de coeur composite (508), les moyens de fixation (658, 659) étant chacun connectés à une patte (662, 664) et l'absorption d'énergie s'effectuant essentiellement par décalage de l'ébrasement du trou des alésages (660, 661) dans les couches de recouvrement (512, 514) à l'intérieur de la zone (672) de la plaque de coeur composite (508) sous l'effet des forces de traction F_{Zug} agissant sur les pattes (662, 664).

7. Structure de construction légère (10) pour des aéronefs, des vaisseaux spatiaux, des navires et des véhicules terrestres, **caractérisée en ce qu'**au moins un absorbeur d'énergie de traction (32, 50, 100, 150, 200, 250, 300, 350, 400, 450, 500, 550, 600, 650, 700, 750) selon l'une quelconque des revendications précédentes pour l'absorption d'énergie cinétique en cas de collision est intégré dans la structure de construction légère (10) .
